(19) Europäisches Patentamt
European Patent Office
Office européen des brevets

(11) EP 4 521 291 A1

(12) EUROPEAN PATENT APPLICATION

(43) Date of publication:
**12.03.2025 Bulletin 2025/11**

(21) Application number: **24197089.6**

(22) Date of filing: **28.08.2024**

(51) International Patent Classification (IPC):
***G06F 30/23*** *(2020.01)* *G06F 119/04* *(2020.01)*

(52) Cooperative Patent Classification (CPC):
**G06F 30/23;** G06F 2119/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 IT 202300018423**

(71) Applicant: **GE Avio S.r.l.**
**10040 Rivalta di Torino (TO) (IT)**

(72) Inventors:
- **ROMANO, Simone**
**10040 Rivalta di Torino (IT)**
- **PERADOTTO, Edoardo Maria**
**10040 Rivalta di Torino (IT)**
- **STRANGES, Cesare**
**10040 Rivalta di Torino (IT)**
- **FOLETTI, Stefano**
**20133 Milan (IT)**
- **GAVAZZONI, Matteo**
**20133 Milan (IT)**
- **BERETTA, Stefano**
**20133 Milan (IT)**

(74) Representative: **Openshaw & Co.**
**8 Castle Street**
**Farnham, Surrey GU9 7HR (GB)**

# (54) SYSTEMS AND METHODS FOR THE ASSESSMENT OF FATIGUE STRENGTH OF CELLULAR STRUCTURES

(57) A system and method are provided for predicting an expected mechanical property, such as fatigue strength, for a component (102) with a cellular structure or a portion thereof. The method includes receiving, by a control circuit, image data (128) for a specimen (103) to reconstruct 3D models (112) of the specimen (103). The specimen (103) includes at least one cell of a cellular structure. The method further includes determining a local stresses for the specimen via finite element analysis of the three-dimensional models (112). The control circuit may then determine a fatigue strength for the specimen (103) based on the local stresses to generate a distribution function of the fatigue strength for the at least one cell of the cellular structure. The control circuit then applies statistics of extremes to the distribution function to predict an expected fatigue strength of a number of cells (104) in the cellular structure.

FIG. 2

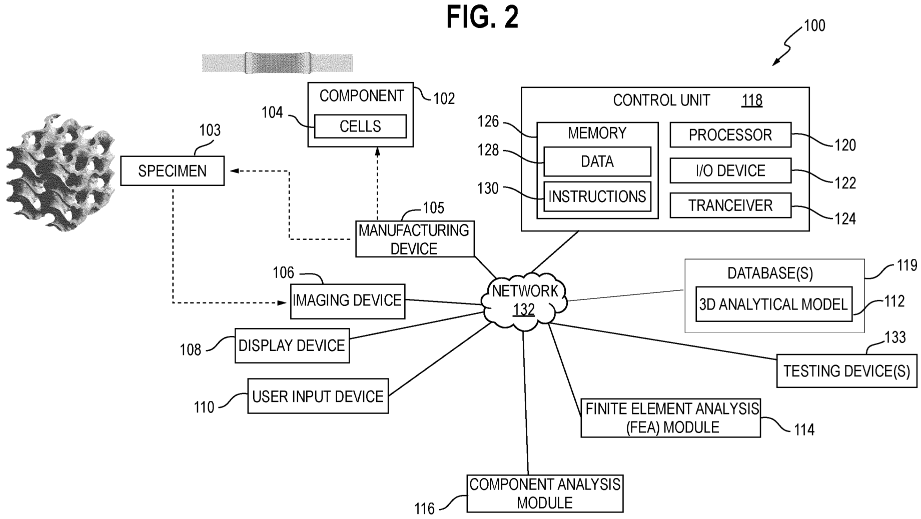


EP 4 521 291 A1

Processed by Luminess, 75001 PARIS (FR)

## Description

### Technical Field

These teachings relate generally to cellular structures, and, more particularly to the assessment of fatigue strength for components having cellular structures.

### Background

Additive manufacturing and other manufacturing techniques provide the ability to produce components having complex structures such as structures with three-dimensional cellular structures. Such cellular structures include a three-dimensional arrangement of repeating cells to create a continuum. Components comprising cellular structures may be subjected to different stresses and loadings during use. Accordingly, it may be useful to evaluate the mechanical properties, such as the fatigue strength, of components having cellular structures to understand their structural integrity and mechanical behavior.

### Brief Description of the Drawings

Various needs are at least partially met through provision of the systems and methods for the assessment of fatigue strength of components described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:

FIG. 1A comprises a graphical depiction of a typical approach for assessing fatigue strength for a component;

FIG. 1B comprises a graphical depiction of approaches for assessing fatigue strength for a component in accordance with various embodiments of these teachings;

FIG. 2 comprises a schematic diagram of a system for assessing fatigue strength for a component in accordance with various embodiments of these teachings;

FIG. 3 comprises a flow diagram of an approach for assessing fatigue strength in accordance with various embodiments of these teachings;

FIG. 4 comprises a flow diagram of a method in accordance with various embodiments of these teachings;

FIG. 5 comprises exemplary specimens that may be employed in the method of FIG. 4 in accordance with various embodiments of these teachings;

FIG. 6 comprises a flow diagram of an approach for generating a probability distribution function for a given volume of a cellular structure in accordance with various embodiments of these teachings;

FIG. 7 comprises probability plots for the fatigue limit ($\sigma_{lim}$) of a single cell, a 8-cell volume, and an exemplary fatigue specimen in accordance with various embodiments of these teachings;

FIG. 8 comprises a graphical overview of an application of the methods described herein showing fatigue strength as a function of a number of cells in accordance with various embodiments of these teachings; and

FIG. 9A comprises an exemplary graph of fatigue strength in accordance with various embodiments of these teachings.

FIG. 9B comprises an exemplary graph of fatigue stress in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### Detailed Description

Various aspects of the present disclosure may be employed to predict the fatigue strength of components or portions thereof having cellular structures. The systems and methods described herein provide robust and computationally feasible approaches for the assessment of additively manufactured metamaterials having cellular structures. The systems and methods of determining fatigue strength apply homogenization, finite element analysis with periodic boundary conditions, and statistical tools to reduce the computational effort involved with evaluating a cellular structure and capture the effects of the real cell geometry in order to assess a predicted stress state and strength of a real or as manufactured component.

Because cellular structures may include a large number of repeating cells, an assessment of mechanical properties, such as fatigue strength, for a component comprising a cellular structure employs a large number of nodes in finite element analysis (FEA) simulations. Thus, finite element analysis (FEA) simulations performed on analytic cell geometries of such cellular structures may require large computational effort and large computational power and/or time to analyze a full-scale component. Further, additive manufacturing processes used to manufacture the cellular structure can introduce inaccuracies and/or anomalies that make prediction of the fatigue strengths of as-manufactured parts challenging. Differences between analytic models of a component and the real-world component due to the effects of the manufacturing process, may result in differences between modeled stresses and stresses observed in the real-world. These are all significant challenges in the context of assessing fatigue strength for a component having a cellular structure with repeating cells.

Fatigue strength, as used herein, refers to the fatigue strength along any portion of an S-N diagram. The S-N diagram defines the number of cycles to failure, Ncycles, when a material is repeatedly cycled through a given stress range, S. Thus, the fatigue strength includes both finite life region (e.g., regions with low cycle fatigue and high cycle fatigue) and infinite life region (e.g., the region where if stress levels are below a certain level, an infinite number of cycles can be applied without causing a failure) on the S-N diagram. Accordingly, the fatigue strength as referred to herein may be the fatigue limit for a material, though it is not limited thereto. Exemplary S-N diagrams are depicted, for example, in FIGS. 9A and 9B.

Generally speaking, the various aspects of the present disclosure can be employed to predict the fatigue strength of components with cellular structures. Cellular structures may include but are not limited to, for example, lattices structures or triply periodic minimal surfaces (TPMS) cell structures. Such components may be manufactured, for example, via additive manufacturing processes. The systems and methods described herein use a combination of homogenization with statistical tools to represent the variability of the fatigue strength for a given volume composed by a finite number of cells. The approaches described herein use a CT scan, such as an x-ray micro computed tomography (μCT) scan, of from a subset of cells in a given volume of a component to reduce the computational efforts involved with prior approaches. There are also limitations (e.g. e.g., small voxel size from μCT scans) to prior approaches that involve the analysis of the full-scale component that limit the accuracy of such approaches. Rather than evaluating a CT scan of the entire volume of the component, the fatigue strength of a subset of cells may be evaluated and results applied to the given volume via homogenization. The statistical tools employed are based on statistics of extremes that infers the fatigue strength of the entire volume of the component, or any number of cells subjected to high stress, based on CT scan of a subset of cells within the volume and finite element analysis of 3D image data acquired from the CT scan. The approaches also apply periodic boundary conditions to further reduce the computational effort and avoid edge effects.

The approaches of assessing fatigue strength provided herein may provide a robust prediction of fatigue strength for metamaterials having a cellular structure at the early stage of design without the need for complex and expensive testing campaigns. The approaches may eliminate or reduce the need for extensive material testing as the approaches utilize CT scans of a subset of cells and finite element analysis. Thus, the approaches for assessing fatigue strength for a component described herein may reduce component development cost, reduce the lead time for development, and increase confidence in design results.

The approaches described herein may also be adopted to compare components manufactured using different manufacturing conditions such as, different machines, parameters, pre-processing, post-processing, etc. For example, manufacturing parameters may be adjusted to obtain a specimen. The cells may then be scanned using μCT, the geometry of the cells reconstructed, and finite element analysis performed on the reconstructed cells in order to assess the fatigue strength of the specimen. The fatigue strength of the component may then be assessed based on the fatigue strength of the specimen. When the manufacturing process is an additive manufacturing process, a large number of inputs or parameters may be adjusted and may affect the resulting component strength. Testing any possible change to such inputs or parameters may not be a possibility or may be expensive and time-consuming. Assessing component strength via the approaches described herein may facilitate the evaluation of expected fatigue strength for a component in a cheaper and less time-consuming manner.

The approaches herein may be applied to components having cellular structures, such as lattice structures, or other structures having a repeating cell structure. Some examples of such components include, but are not limited to, components having gyroid, diamond, or trifurcating unit cells.

FIG. 1A provides a graphical depiction of a typical approach for assessing fatigue strength for an additively manufactured part having a cellular structure. The x-axis on the graphical depiction represents model size, ranging from a cell-level model to a component-level model. A cell-level model captures a single unit cell within the cellular structure of a component. A specimen-level model captures a number of cells in the component. A feature-level model captures a portion of the component. A component-level model captures the entire or a majority of the component. The y-axis depicts the model accuracy.

The accuracy below line "X" is what can be accomplished for assessing fatigue strength via standard modeling. Typical approaches that involve standard modeling may evaluate material stiffness and stress (as-designed). However, standard modeling may not be able to assess the real stress concentration factor (Kt), which quantifies how concentrated the stress is in a mechanical part. Nor can standard modeling assess or predict structural failure (e.g., when the material is stressed to its strength limit, causing fracture or excessive deformation) or functional failure (e.g., the inability of the material to fulfill an intended function to a standard performance). The accuracy limits of standard modeling may be limited, for example, by the inability to capture anomalies or geometrical difference between unit cells of the cellular structure as-designed and as-manufactured.

Referring still to FIG. 1A, typical approaches for assessing fatigue strength for a cellular structure may involve constructing a three-dimensional (3D) analytical model of a unit cell of the component to assess stiffness. The component is then homogenized for stiffness, that is, stiffness of the unit cell is applied to a larger volume of component, for example, the portion of the component including cells. Sub-models may then be constructed for individual features of the component in order to evaluate the stress applied to the feature (as-designed). Sub-models may include the detailed 3D mesh and nodes that are involved in order to model the cellular structure of the feature. Modeling the cellular structure of the entire component under typical approaches may be prohibitive as it involves excessive computational effort due to the number of nodes involved in describing the 3D shape of the cellular structure with the required level of accuracy. Further, the 3D analytical model of the unit cell may not capture anomalies and geometrical differences in the real cell.

FIG. 1B provides a graphical depiction of the approaches provided herein for predicting fatigue strength for an additively manufactured component having a cellular structure. The x-axis and y-axis are the same as those described with reference to FIG. 1A. The approaches provided herein use imaging data, such as data from a computed tomography (CT) scan, of the real unit cell geometry of a cellular structure (e.g., an image of a specimen that includes the unit cell or a number of cells as-manufactured). Thus, an actual 3D image or model of the real unit cell of the cellular structure may be employed to assess the stress concentration factor (Kt), for example, via finite element analysis. The approaches provided herein may perform finite element calculations based on the structure of a real unit cell. Using finite element analysis, simulations may be performed on the real unit cell to derive real constants that define the behavior of the material. Such constants may include the elastic modulus (E), yielding stress ($\sigma_y$), ultimate strength ($\sigma_{max}$), strain at failure ($\varepsilon_f$), fatigue limit ($\sigma_{lim}$), stress concentration factor (Kt), Poisson's ratio (v), shear modulus (G), yield locus, or similar. The real constants may then be applied to the entire component via homogenization. Using statistical tools, such as weakest link theory and statistics of extremes, and periodic boundary conditions, it is then possible to derive the fatigue strength of the component or other metamaterials.

Using the approaches provided herein for predicting fatigue strength, it may be possible to predict the occurrence of a failure or a part failure area. The part failure area may be, for example, a region of a component that is subjected to high stress and, thus, prone to possible failure. The part failure area may also be referred to as a critical area. Further, the approaches provided herein may eliminate the need to construct a 3D analytical model of the entire or full component, which would involve a prohibitive number of nodes in the 3D mesh, or to construct a model of particular features of the component.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description. Referring now to the drawings, and in particular, to FIG. 2, a system 100 that is compatible with many of these teachings will now be presented.

The system 100 may be employed to predict fatigue strength for a component 102 as-manufactured (e.g., for the real cell geometry). The component 102 has a cellular structure with cells 104, which may also be referred to as unit cells. In some aspects, the component 102 is an additively manufactured component. In some embodiments, the component 102 is a heat exchanger of a gas turbine engine or a portion thereof. It is contemplated that the systems and methods described herein may be applied to other gas turbine engine components. However, it is to be understood that the systems and methods may also apply to other types of parts or components including a cellular structure.

The system 100 may analyze a specimen 103 that is representative of the component 102 and use such analysis results to infer the fatigue strength of the component 102 (e.g., in its entirety) as-manufactured. The specimen 103 is a real printed or manufactured cell geometry. The specimen 103 may include one or multiple cells. The specimen 103 also has a cellular structure. The specimen 103 may be representative of the component 102 in the sense that the specimen 103 has the same or a similar cell size as the component 102 and/or has the same or a similar cell geometry of the component. In some aspects, the specimen 103 may be also representative of the component 102 in the sense that the specimen 103 was manufactured using the same type of manufacturing device (e.g., a 3D printing device), under the same manufacturing conditions, was placed in the same or a similar position in the build platform during manufacturing, and/or was oriented in the same manner during manufacturing as the component 102. Thus, the specimen 103 includes a number of cells that reflect the real cell geometry of the component 102. As described in further detail below, the specimen will be scanned and reconstructed to a 3D model of the real cell geometry.

The system 100 includes a manufacturing device 105, an imaging device 106, a display device 108, a user input device 110, a three-dimension (3D) model 112, a finite element analysis (FEA) module 114, and one or more databases 119.

The manufacturing device 105 may be any type of manufacturing device capable of constructing an object having a cellular structure. In some embodiments, the manufacturing device 105 is an additive manufacturing device such as a 3D printer and may construct the object via one or more of binder jetting, directed energy deposition, material extrusion, powder bed fusion, sheet lamination, VAT polymerization, and material jetting. The manufacturing device 105 may be configured to manufacture the specimen 103, the component 102, or portions thereof.

The imaging device 106 is configured to scan the specimen 103 or a portion thereof to reconstruct a three-dimensional (3D) image of the target object, including the internal structure (e.g., the cellular structure) of the target object. It is also contemplated that the imaging device 106 may scan the component 102 or portions thereof. In some approaches, the imaging device 106 may scan a subset of cells 104 within the cellular structure of the component 102 or the specimen 103. In some aspects, the imaging device 106 may acquire image data without destroying the specimen 103. In this manner, the imaging device 106 may be employed to provide 3D images of a real cell geometry in the cellular structure of the specimen 103. In one example, the imaging device 106 may be a μCT device that illuminates the specimen 103 using an x-ray source and acquire a series of two-dimensional (2D) images from different angles which are used to reconstruct a high-resolution 3D image of the specimen 103.

The imaging device 106 may be any suitable three-dimensional imaging device or scanner including, for example, an in-situ tomography scanner such as an x-ray micro computed tomography (μCT) scanner, a synchrotron tomography scanner, or other optical scanners. The imaging device 106 may image the specimen 103 with submicron resolution to reconstruct the shape or geometry of a cell in the cellular structure. In some embodiments, the imaging device 106 may be incorporated into or otherwise associated with the manufacturing device 105 or a corresponding manufacturing process.

A display device 108 may be configured to present the 3D image of the specimen 103 as generated by the imaging device 106. The display device 108 may be associated with the imaging device 106. The display device 108 may be of any suitable type including but not limited to, a cathode ray tube (CRT) device, a liquid crystal display (LCD) device, a light emitting diode (LED) device, etc. The display device 108 may also present additional information or attributes associated with the specimen 103 and/or an identifier in the image such as, for example, a name, model number, type, production date, etc. associated with the specimen 103.

The user input device 110 is configured to receive input from a user. The input for a user may include, but is not limited to, device settings, user preferences, component information, etc. The user input device 110 can take any suitable form. For example, the user input device 110 may include, but is not limited to a mouse, a touchscreen, a keyboard, a trackpad, a number pad, etc.

In some embodiments, the display device 108 and the user input device 110 may be integrated into a single component, such as a touchscreen device. In some embodiments, the display device 108 and/or the user input device 110 may be included in a computing device such as, for example, a desktop computer, a laptop computer, a tablet, a mobile device, etc. One or both of the display device 108 and the user input device 110 may also be associated with the imaging device 106 and/or an electronic device that is integrated with or communicatively coupled with the imaging device 106.

The 3D model 112 is a 3D model of the specimen 103, the component 102, or portions thereof, including any cellular structures therein. The 3D model 112 is stored in one or more of the databases 119. Though, it is contemplated that the 3D model 112 need not be stored in the databases 119 and, in other configurations, may be stored or housed in another components or portion of the system 100, such as in the FEA module 114 or the component analysis module 116 or may be received from a database or similar that is external to the system 100. The 3D model 112 may be, for example, a model of the specimen 103 or the component 102 as-designed. The 3D model 112 depicts the geometry of the specimen 103 or of the component 102. Equations, clouds of points, or other suitable approaches may reconstruct the 3D model 112 using image data or scans of the specimen 103 and/or the component 102 that are obtained using the imaging device 106. The 3D model 112 may provide the actual cell geometry of the specimen 103 based on image data acquired by the imaging device 106. Simulations may be performed on the 3D model 112 to evaluate performance and optimize the design of the component 102. The 3D model 112 may be any suitable type of 3D model such as, for example, a computer-aided design (CAD) and/or computer-aided engineering (CAE) model. In some approaches, the 3D model 112 is an implicit model.

In some embodiments, data from the 3D model 112 may be exported or otherwise transmitted for input into the FEA module 114. For example, as the FEA module 114 may receive a finite element mesh of the specimen 103 from the 3D model. Such a finite element mesh may include a plurality of nodes which help to define the structure of the specimen 103.

The FEA module 114 is configured to perform finite element analysis for structural analysis of the specimen 103, the component 102 or portions thereof, such as for a cell or for subset of cells 104 of the component 102. Though the FEA module 114 is illustrated as being distinct from the control unit 118, it is contemplated that, in some configurations, the FEA module 114 may be integrated into the control unit 118. For example, the processor 120 may be configured to perform one or more of the functions of the FEA module 114. For example, the FEA module 114 may be configured to employ calculations based on mathematical representations, models, and simulations of the specimen 103, the component 102 or portions thereof to analyze how the component 102 behaves under various physical conditions, for example, subjected various stresses. In this manner, the FEA module 114 may be employed to determine the fatigue strength of the specimen 103, the component 102 or portions thereof either as-designed (e.g., based on model data from the 3D model 112) or as-manufactured (e.g., based on image data acquired from the imaging device 106).

The FEA module 114 may also be configured to receive data indicative of mechanical properties, the geometry(e.g., data on the cellular structure of the component 102), and/or data on the type of component 102 and/or specimen 103. It is contemplated that the FEA module 1 14 may receive and utilize model data from the 3D model 112, image data from the imaging device 106, and/or data from one or more databases 119 as input data.

The FEA module 1 14 may be configured to generate the fatigue strength or other mechanical properties of the specimen 103. The FEA module 114 may perform finite element analysis using the image data for the specimen 103 that is acquired by the imaging device 106. The FEA module 114 may derive constants that are indicative of the mechanical properties, such as the fatigue strength, of the specimen 103. The constants may include for example the constants indicative of stiffness, such as Young's modulus, Poisson's ratio, and tangent modulus. The constants may also include, for example, constants indicative of static stress, such as yield stress and ultimate tensile stress. The FEA module 114 may also perform finite element analysis using one or more periodic boundary conditions in order to simulate the component 102 in its entirety (or portions thereof) by modelling a finite representative volume element which, in this case, may be the specimen 103 that is scanned by the imaging device 106.

In some embodiments, the FEA module 114 may be configured to identify local stresses, for the specimen 103 and/or for a unit cell thereof. The FEA module 114 may also be configured to identify local stresses on the component 102.

In some aspects, the FEA module 114 may be homogenized for properties such as stiffness. In addition, the FEA module 1 14 may be homogenized for strength. The FEA module 114, once homogenized, may not include cells of the cellular structure but, instead, represent a bulk material without cells. Homogenization may be performed in the FEA module 114 to model the component 102 based on the properties and/or constants (e.g., stiffness) for the specimen 103. For example, the stiffness for the specimen 103, may be used to determine macroscale structural performance of the component 102. Homogenization may result in a homogenized model of the component 102 without spatially dependent properties and/or constants. Thus, the properties of the specimen 103 (e.g., the microstructure) are applied to an entire volume of the component 102 (e.g., the macrostructure) or to any number of cells 104 in a volume of the component 102. In this manner, the properties of the real cell geometry, which is present in the specimen 103, may be applied to the full volume (or a larger volume) of the component 102. The homogenized material may then be analyzed via the FEA module 114 (and/or an FEA solver, for example, the FEA module 114 may be an input to the FEA solver) to obtain the homogenized stresses for the component 102.

The component evaluation module 116 may utilize statistical tools to represent the variability of the fatigue strength for the specimen 103 (e.g., in a given volume of the component 102 composed of a subset or finite number of cells 104). Though the component evaluation module 116 is illustrated as being distinct from the control unit 118, it is contemplated that, in some configurations, the component evaluation module 116 may be integrated into the control unit 118. For example, the processor 120 may be configured to perform one or more of the functions of the component evaluation module 116.

The component evaluation module 116 may be configured to employ various statistical tools such as weakest-link scaling and statistics of extremes. The component evaluation module 116 may apply a weakest link model to estimate the behavior of a number of cells based on stresses at the failure area of the specimen 103. Using weakest-link scaling, the entire component fails if the link or unit cell with the lowest strength fails. Weakest-link scaling may use finite element analysis to provide the worst-case static and/or fatigue strength for a cellular structure. In one example, the failure area in the specimen 103 may be used to estimate the behavior of the component 102 (e.g., in its entirety) by applying statistics of extremes. Statistics of extremes provides deviations from a median of probability distributions. The component evaluation module 116 may apply statistics of extremes to obtain a description of a tail of a distribution describing the strength of a single cell or a subset of cells in the cellular structure. The distribution describing the strength of the specimen 103 may then be used to extrapolate a probability distribution for the component 102 (e.g., in its entirety or for a number of cells thereof). The component evaluation module 116 may be configured to perform one or more of the approaches described with reference to FIG. 7.

The system 100 may further include one or more databases 119 that house various types of data useful to fatigue strength assessment. In some embodiments, the databases 119 may include image data of the specimen 103, for example, image data acquired from the imaging device 106. The databases 119 may also include data on or from the 3D model 112, such as data to reconstruct the 3D geometry of the specimen or the component 102.

The control unit 118 may function as a computing device to perform the functions and methods described herein. It is contemplated that the control unit 118 may include one or more of the 3D model 112, the FEA module 114, and/or the component evaluation module 116 or otherwise may be in communication with these components of the system 100. The control unit 118 may include one or more processors 120, input/output (I/O) devices 122, transceivers 124, and memory devices 126. The processors 120 may include any suitable processing device such as a microprocessor, microcontroller, integrated circuit, logic device, or other suitable processing device. The processors 120 may be used to execute or assist in executing the steps of the processes, methods, functionality and techniques described herein, and to control various communications, decisions, programs, content, listings, services, interfaces, logging, reporting, etc. Further, the one or more processors 120 may access the memory devices 126, which may store instructions 130, code and the like that are implemented by the processors 120 to implement intended functionality.

The memory devices 126 typically include one or more processor-readable and/or computer-readable media accessed by at least the processors 120 and may include volatile and/or nonvolatile media, such as RAM, ROM, EEPROM, flash memory and/or other memory technology. Further, the memory devices 126 are shown as internal to the control unit 118; however, the memory devices 126 may be internal, external or a combination of internal and external memory. Similarly, some or all of the memory devices 126 can be internal, external or a combination of internal and external memory of the processors 120. The memory devices 126 may be substantially any relevant memory such as, but not limited to, solid-state storage devices or drives, hard drive, one or more of universal serial bus (USB) stick or drive, flash memory secure digital (SD) card, other memory cards, and other such memory or combinations of two or more of such memory, and some or all of the memory may be distributed at multiple locations over a computer network. The memory devices 126 may store data 128 such as code, software, executables, scripts, data, content, lists, programming, programs, log or history data, engine information, component information, and the like. The various components of the system 100 may coupled together via a bus, or, in some configurations, the various components may actually be coupled to the control unit 118 and/or one or more other components directly.

Typically, the control unit 118 further includes one or more communication interfaces, ports, or transceivers 124 and the like allowing the control unit 118 to communicate over a communication bus, a distributed computer, and/or a communication network (e.g., a local area network (LAN), the Internet, wide area network (WAN), etc.) with other devices and/or other such communications or combinations of two or more such communication methods. Further, the transceivers 124 may be configured for wired, wireless, optical, fiber optical cable, satellite, or other such communication configurations or combinations of two or more such communications.

The I/O devices 122 may be any relevant port or combinations of ports, such as but not limited to USB, Ethernet, or other such ports. The I/O devices 122 may be configured to allow wired and/or wireless communication coupling to external components. For example, the I/O devices 122 may provide wired communication and/or wireless communication (e.g., Wi-Fi, Bluetooth, cellular, RF, and/or other such wireless communication), and in some instances may include any suitable wired and/or wireless interfacing device, circuit and/or connecting device, such as but not limited to one or more transmitters, receivers, transceivers, or combination of two or more of such devices.

The control unit 118 may receive data from various components of the system 100. Further, the control unit 118 may transmit data to various components of the system 100. For example, the control unit 118 may receive model data, which may include one or more design parameters, from the 3D model 112 and may transmit the model data to the manufacturing device 105 so that the manufacturing device can manufacture the component 102 in accordance with model data. The control unit 118 may also receive input data from the user input device 110 and provide instructions to the imaging device 106 and/or the manufacturing device based on such input data. The control unit 118 may further receive image data from the imaging device 106 and/or from the one or more databases 119. The control circuit may transmit image data to the 3D model 112 and/or to the FEA module 114.

As illustrated in FIG. 2, the various components of the system 100 may communicate directly or indirectly, such as over one or more distributed communication networks, such as a network 132. For example, the network 132 may include LAN, WAN, Internet, cellular, Wi-Fi, and other such communication networks or combinations of two or more such networks.

In certain embodiments, the system 100 may also include one or more testing devices 133 that are configured to test the specimen 103 and/or the component 102 as-manufactured. The testing devices 133 may be any devices suitable to conduct mechanical testing, for example, compression, tension, bending, torsion, or fatigue testing. The testing devices 133 may include one or more fatigue testing machines such as a wheel disk-hub fatigue test machine, a dynamic fatigue testing machine, a rotary bending fatigue testing machine, a servo hydraulic fatigue testing machine, a zipper reciprocating fatigue testing machine, a spring fatigue testing machine, an axial fatigue testing machine, a torsional fatigue testing machine, a radial fatigue testing machine, a cyclic fatigue testing machine. The testing devices 133 may also include one or more universal testing machines (UTM) that are configured to determine a material's strength and deformation behavior under compressive (pressing) or tensile loads. Such UTMS may also be configured to perform bend tests, for example, to evaluate material ductility, bend strength, fracture strength, and resistance to fracture. The testing devices 133 may also include one or more torsion testing machines configured to simulate torsional movements of materials to determine the torque load of specimens made of different materials. The testing devices 133 may include a test stand to hold a specimen and a load cell that translates a magnitude of a measured force to an electrical signal that can be quantified. The test stand may be configured to hold the specimen during testing and, in some approaches, includes a top grip to engage a top portion of the specimen and a bottom grip to engage a bottom portion of the specimen. It is contemplated that different test stand configurations may be employed based on the size and shape of the specimen. The force gauge may collect measurements over the course of the test and may output peak/and or average force values which may be translated into material properties.

The testing devices 133 may be controlled by a testing control unit which may be in communication with, for example, the control unit 118. The testing control unit may respond to command signals to operate the testing devices 133. Further, data acquired or generated by the testing devices 133 may be transmitted to the databases 119, the finite element analysis module 114, and/or the component analysis module 116.

In operation, the system 100 may be used to assess the fatigue strength of the component 102 as-manufactured. Rather than manufacturing, acquiring images, and analyzing of the component 102 in its entirety, the system 100 may manufacture the specimen 103, which is representative of the component 102 as-manufactured. Based on analysis of the specimen 103 as described herein, the component 102 may subsequently be manufactured and the properties, such as the fatigue strength, of the component 102 as-manufactured predicted.

The imaging device 106 acquires one or more images of the specimen 103. In some approaches, the imaging device 106 may acquire images of a subset of cells 104 in the specimen 103. The images acquired by the imaging device 106 are used by the FEA module 114 to determine a fatigue strength for the specimen 103 or of a cell or a number of cells in the specimen 103. The fatigue strength is used by the component evaluation module 116 to evaluate the fatigue strength for the component 102 as-manufactured at a macroscale.

In some approaches, the testing devices 133 may be also employed to detect anomalies in the component 102 as-manufactured. Anomalies may include any feature that is present in the component 102 but that should not be present according to the design intent. Anomalies may include, for example, defects, geometrical inaccuracies, and process-dependent anomalies such as pores, cracks, lack of fusion, etc. in the component 102. For example, the testing devices 133 may perform compression, tension, and/or fatigue testing on the component 102 as-manufactured to detect defects or to determine mechanical properties, such as the fatigue strength, of the component 102 as-manufactured. The results from such testing may be used to perform fractography to determine the relationship between the microstructure of the component 102 and crack initiation and propagation. In this manner, it may be possible to determine the root cause of cracks or fractures in the component 102.

In other approaches, the testing devices 133 may measure the strength, for example the actual fatigue strength, of the component 102 as-manufactured. Thus, the testing devices 133 may be used to generate design curves for the component 102. The design curves may include the material allowable values for mechanical properties of the component 102. For example, the design curves may include the maximum stress over which the material is expected to yield or the fatigue failure as a function of the number of fatigue cycles. The measured strength may be compared to the predicted strength, for example to the predicted fatigue strength, generated by the FEA module 114. In this manner in order to determine the error or uncertainty in the predicted fatigue strength.

Turning to FIG. 3, a flow diagram of exemplary approaches for assessing fatigue strength of a component having a cellular structure are provided. In some embodiments, the approaches may be performed using the system 100 or portions thereof.

In the approach 134, the analytical cell strength the component may be evaluated. Analytical cell strength provides the strength of a unit cell in the cellular structure of the component as-designed and, accordingly, is a theoretical value. A 3D analytical model 136 of the component may be generated. The 3D analytical model 136 model may provide the analytic cell geometry 138 of the component as-designed. Finite element analysis 140 may be performed on the analytic cell geometry in order to obtain the analytical cell strength 142.

In the approach 135, the real cell strength of the component may be evaluated. The real cell strength may be determined, for example, by analyzing a specimen that is representative of the component as manufactured. Real cell strength provides the strength of a unit cell in the cellular structure of the component as-manufactured. A manufacturing process 144, such as an additive manufacturing process, is used to produce a real cell geometry 146 which is present in the component as-manufactured. Finite element analysis 148 may be performed on the real cell geometry 146 in order to obtain the real cell strength 150. Statistics of extremes 152 may then be used to predict the expected component strength 154 based on the real cell strength 150. One or more design criteria 156 for the component (or a component of the same type as the component as-manufactured) may be derived from the expected component strength 154.

The analytical cell strength 142 may be compared to the real cell strength 150 in order to assess differences in strength caused by the manufacturing process 144. For example, there may be defects or abnormalities associated with the manufacturing process 144 which may result in a real cell strength 150 being lower than the analytical cell strength 142.

Further, testing 158 may be performed on the real cell geometry 146 and/or on the component as-manufactured. For example, testing 158 may be performed to evaluate a measured strength 162 of the as-manufactured component that includes the real cell geometry 146. The measured strength 162 may then be compared to the expected component strength 154. Such a comparison may be used to evaluate error or uncertainty associated with the finite element analysis 148. Error and uncertainties may also be caused by the 3D imaging resolution, inaccuracies during testing, and/or analytical models for fatigue strength definition. It is also contemplated that testing 158 may be performed for defect recognition 160 and, accordingly, may be used to identify one or more defects such as cracks in in the real cell geometry 146 or in the component as-manufactured.

With reference to FIG. 4, an exemplary method of predicting an expected fatigue strength for an as-manufactured component having a cellular structure, which may also referred to herein as a target component, is provided. In a typical application setting many (but not necessarily all) of the steps illustrated in FIG. 4 are carried out by a control circuit, such as the control unit 118.

The method involves analyzing a specimen that is representative of the target component. It is contemplated that the control circuit may analyze one or more specimen. Increasing the number of specimen may increase the accuracy of the predicted fatigue strength. The specimen includes at least one cell of a cellular structure as-manufactured (e.g., a real cell geometry). In some approaches, the specimen may include a group of cells in the cellular structure of a component. In other approaches, the specimen may be a full component. The specimen may have cells of the same size, type, and/or geometry as the target component. In addition, the specimen may be manufactured under conditions analogous to the manufacturing conditions of the target component.

In some aspects, the specimen may include about 2 to about 30 cells. In certain aspects, the specimen of the real cell geometry may be about 2 cells x 2 cells x 2 cells and, in other aspects, may be about 4 cells x 4 cells x 6 cells.

In FIG. 4, block 170 through block 174 illustrate the analysis of cells (or of a group of cells) in a cellular structure via a specimen of the cellular structure to obtain a fatigue strength for a cellular structure as a function of the number of cells in the cellular structure. Block 175 through block 177 illustrate a component level analysis that uses homogenization of a component to obtain a spatial distribution of stresses experienced by the component.

At block 170, the control circuit receives image data for one or more specimen to reconstruct a plurality of 3D models of the specimen. In some approaches, the control circuit reconstructs a 3D model of each cell in the specimen. Though, it is contemplated that, in other approaches, the control circuit may reconstruct a 3D model for a number (less than all) of the cells in the specimen. For example, the control circuit may reconstruct 3D models of a group of cells in the specimen. Thus, the 3D models may be models of one or a plurality of cells. The plurality of 3D models is further analyzed at block 172 to block 174 to create a distribution of the fatigue strength of the specimen, which is described in further detail below. It is also contemplated that, in other embodiments, the 3D models may be analyzed to create a distribution of constants or properties that are indicative of fatigue strength (e.g., the fatigue stress concentration factor (Kf)). In some aspects, the control circuit may instruct one or more imaging devices to acquire images of the specimen. The control circuit may then receive the image data from the imaging device and use the image data to reconstruct the plurality of 3D models of the specimen. For example, the control circuit may be in communication with a such as a $\mu$CT scanner and may instruct the scanner to acquire one or more images and then receive the images from the scanner to reconstruct the 3D models.

The image data may include, for example, one or more images of the cellular structure as-manufactured. It is also contemplated that the control circuit may directly or indirectly receive the 3D models of the one or more specimen, for example, from a database. The control circuit may receive the image data, either directly or indirectly, from an imaging device such as a μCT scanner. In some approaches, the control circuit may receive the image data or the 3D models from a database housing such data. In some approaches, at block 170, an imaging device may scan or acquire images of the one or more specimen in order to obtain the image data of the cellular structure as-manufactured. The image data may then be transmitted from the imaging device to the control circuit. In some aspects, the specimen may include about 2 to about 30 cells. In some aspects, the specimens of the real cell geometry may be about 2 cells x 2 cells x 2 cells and, in other aspects, may be about 4 cells x 4 cells x 6 cells. In other aspects, the specimens may include a single cell (e.g., a single unit cell). It is to be understood that multiple specimens may be scanned and analyzed as described at block 172 to block 174 to create a distribution of the mechanical properties or constants indicative thereof (e.g., the stress concentration factor (Kf), the fatigue limit ($\sigma_{lim}$)), which is described in further detail below.

Turning briefly to FIG. 5, in one non-limiting example, the control circuit may analyze about! to M single cell models 182 of a cellular structure of the specimen. The single cell model 182 is a 3D model of a single cell of a specimen and reflects the real or as-manufactured cell geometry. The control circuit may scan the specimen using a μCT scanner and reconstruct the single cell model 182 using image data from the scan. In one example, where M=100, the specimen included 100 cells and the control circuit reconstructs a 3D model for each of the 100 cells. The cells of the specimen and the cells of the target component may be of the same type (e.g., TPMS).

Still with reference to FIG. 5, in another non-limiting example, the control circuit may analyze about one (1) to N 8-cell volume models 184 of cells of a cellular structure of the specimen. The 8-cell volume model 184, includes a group of 8 cells of the cellular structure of the specimen. The 8-cell volume model 184 is a 3D model of a volume of 8 cells as-manufactured and, accordingly, captures the real cell geometry of the specimen. The control circuit may scan the specimen using a μCT scanner and reconstruct the 8-cell volume model 184 using image data from the scan. In one example, where N=4, 4 8-cell volumes (e.g., 4 distinct 2 cell x 2 cell x 2 cell groups of cells) are modeled to generate 4 8-cell volume models 184. The cells in the groups of cells and the cells of the target component may be of the same type (e.g., TPMS).

Returning to FIG. 4, at block 172, the control circuit determines local stresses for each of the plurality of 3D models reconstructed at block 170 for a given applied homogenized stress. The control circuit determines local stresses for the 3D models via finite element analysis with periodic boundary conditions. It is contemplated that control circuit may determine any composition of stress tensors for the nodes of the model of the specimen (e.g., the real cell geometry). For example, the control circuit may analyze a single node or any function of the tensors of the nodes around it. In some embodiments, the control circuit may also determine strains for the specimen. The control circuit may further determine one or more constants for the specimen, such as material-related parameters like El-Haddad's size parameter.

In some approaches, the control circuit may include or be in communication with an FEA module. The FEA module may determine applied homogenized stresses, strains, or other constants for the 3D models. The control circuit may perform simulations using the FEA module to simulate stresses on the 3D model. The FEA module may be used to simulate testing on 3D models of the specimen (e.g., on the real cell geometry) to derive the constants that define the behavior of the cellular structure when subjected to stresses. The FEA module uses periodic boundary conditions to evaluate the strength of a larger volume of the component as-manufactured based on the 3D modeled real cell geometry.

In some approaches, the control circuit determines the fatigue strength for a failure area of the 3D model (e.g., the failure area in cell or the failure area the group of cells modeled via the 3D model). For example, the fatigue limit ($\sigma_{lim}$) for the 3D model might be determined as the applied stress, which causes the maximum local stress to be equal to the fatigue strength of the constitutive material.

At block 173, the control circuit determines the fatigue strength for each of the plurality of 3D models for the given applied homogenized stress. Using the fatigue strength for various applied homogenized stresses, the control circuit generates a probability distribution function of the given 3D volume of cells present in the 3D model. For example, if the 3D models include a single cell, the control circuit generates a probability distribution function that provides the probability that a single cell of the specimen has a particular fatigue strength. In another example, if the 3D models include eight (8) cells, the control circuit generates a probability distribution function that provides the probability that an 8-cell volume of the specimen has a particular fatigue strength. Exemplary probability distribution functions of fatigue strength are depicted in FIG. 7 (see lines 202 for a single cell probability distribution function; see line 206 for an 8-cell probability distribution function).

The control circuit generates the probability distribution function, for example, for a single cell using the fatigue strength determined for each 3D model at block 173. In particular, the control circuit generates a distribution of the fatigue strength for the 3D models and obtains a best fit of the distribution to create the probability distribution function. Referring again to FIG. 7, the control circuit may generate a distribution such as the distribution of fatigue strength shown by line 200 using the fatigue strengths determined via FEA simulations of a plurality of single cell models.

At block 174, the control circuit predicts an expected fatigue strength for a volume comprising a number of cells (e.g., for the number of cells in the target component) by applying statistics of extremes to the probability distribution function generated at block 173. The control circuit may employ statistics of extremes to extrapolate the fatigue strength of any number of cells (e.g., a target number of cells) in a component as-manufactured based on the probability distribution function of the fatigue strength for the 3D models. Thus, using statistics of extremes, it is possible to determine the fatigue strength for a cellular structure as a function of the number of cells (Ncells) in the cellular structure. FIG. 8 provides an exemplary graph that may be generated using statistics of extremes by the approach described at block 174. In particular, line 234 in FIG. 8 provides fatigue limit for a component as a function of the number of cells (Ncells).

FIG. 7 illustrates an exemplary application of statistics of extremes to a probability distribution function. In FIG. 7, statistics of extremes is applied to the single cell probability distribution function (line 202) to derive the probability distribution function for a target component comprising 360 cells (line 210). Thus, the probability distribution function for the 3D models (which may include, for example, a single cell or a group of cells such as an 8-cell volume) is used to extrapolate the fatigue strength to larger volumes of the cellular structure (e.g., to a larger number of cells or a full component).

By some approaches, the following formula may be used to extrapolate the fatigue strength of a component as-manufactured based on the fatigue strength of the specimens as determined from 3D models of the specimens, where the 3D model may have 1 or more cells:

$$F_T = F_N^{(T/N)}$$

wherein

T is a target number of cells to be analyzed for a component as-manufactured;

$F_T$ is a cumulative distribution function of fatigue strength for T cells in the component as-manufactured;

N is the number of cells in the 3D model, wherein N can be 1 or larger; and

$F_N$ is a cumulative distribution function of fatigue strength for N cells.

A cumulative distribution function may refer to a real-valued random variable X or a distribution function of X, evaluated at x, that provides the probability that X will take a value less than or equal to x.

Using statistics of extremes, for example, applying the above formula, the control circuit may predict an expected fatigue strength for any volume comprising a number of cells. In one example, the control circuit predicts an expected fatigue strength for any number of cells in a cellular structure. Because the probability distribution function is generated based on 3D models of a real cell geometry, the expected fatigue strength captures effects present in the real cell geometry to improve accuracy of the expected fatigue strength. Statistics of extremes may predict expected fatigue strength for any number of cells have the same type of cellular structure as the specimen (e.g., the real cell geometry captured in the 3D models).

At block 175, the control circuit identifies the properties of an equivalent homogenous material representative of the cellular structure of the specimen via homogenization. For example, the control circuit may identify the elastic tensor or any elastic properties that is representative of the cellular structure of the specimen (and, accordingly, is also representative of the cellular structure of the target component). It may be desirable, for example, to simulate a component composed of a bulk material as opposed to simulating a component composed of a cellular structure, which may be computational burdensome due the large number of cells in a component. By obtaining properties of an equivalent homogenous material that is representative of the cellular structure of the specimen (and of the target component) as described at block 175, it is possible to instead model the target component as a bulk material while still capturing the effects or properties of the cellular structure of the target component.

At block 176, the control circuit performs a component-level analysis of stresses of the target component. In the component-level analysis, the cellular structure of the target component is substituted with the equivalent homogenous material that was determined at block 175. In particular, the control circuit performs FEA analysis of the component, for example, via an FEA module. In the component-level analysis, the control circuit generates a component model that is homogenized or composed of a bulk material. The control circuit homogenizes the component model (e.g., an FEA module of the component) to represent the target component as a bulk material as opposed to as cellular structure. The properties of the equivalent homogenous material, which are representative of the properties of the cellular structure, are applied to the bulk material in the FEA module. In this manner, the bulk material of the modeled component is macroscopically equivalent to the cellular structure in the target component. The equivalent homogenous material will exhibit equivalent macroscopic behavior to the microstructure (e.g., the cellular structure) of the target component.

At block 177, the control circuit discretizes the modeled component into subvolumes based on a spatial distribution of stresses in the modeled component. The stress spatial distribution provides stress on the modeled component as a function of the position within the modeled component. For example, the control circuit may filter or apply a mask the modeled component to select particular values or ranges of stress. In some approaches, the control circuit may filter or mask for the highest stresses on the component to identify failure areas of the modeled component. The control circuit my filter or apply or mask to the modeled component for a particular stress range to get the subvolumes of the modeled component that have a stress in the particular stress range.

For example, the control circuit may filter or apply a mask to the modeled component for stresses in the range of 90-100 MPa. The control circuit may then identify subvolumes within the modeled component that are subjected to stresses in the range of 90-100 MPa.

At block 178, the control circuit performs fatigue strength assessment for each subvolume (or some number of subvolumes) of the modeled component. The control circuit performs the fatigue strength assessment by comparing the stresses (from block 177) with the expected fatigue strength (from block 174) for the number of cells in the subvolume. The control circuit extrapolates the expected fatigue strength to a volume composed of the number of cells present in the subvolume.

For example, if a subvolume of 8 cells of the modeled component is subjected stresses in the range of 90-100 MPa, the control circuit uses the function (from block 174), which provides expected fatigue strength as a function of the number of cells in the cellular structure, to determine the expected fatigue strength for that subvolume. The control circuit then compares the expected fatigue strength for the subvolume to the stress on the subvolume as determined by the spatial distribution of stresses in the modeled component (from block 177) to assess whether the component would exceed the fatigue strength. In this manner, the control circuit may determine which subvolumes of the target component would fail first, which indicates the fatigue strength for the target component as a whole.

Based on the fatigue strength for the target component (or a portion or subvolume thereof), the control circuit may generate one or more design parameters for a component as-designed. The design parameters may be incorporated into the 3D analytical model to generate a blueprint or model of the component as-designed. Such a blueprint or model in the 3D analytical model may be used to manufacture the component as-designed. In one example, the design parameter may be a component geometry that maximizes or otherwise increases the fatigue strength of the component as-designed. In some embodiments, the fatigue strength may be used to build a margin into the design for a component.

The method may optionally include manufacturing or otherwise physically constructing the component as-designed according to the design parameter. In some approaches, the control circuit may output design data indicative of the design parameter. The control circuit may transmit design data to a manufacturing device, such as a 3D printer. By one approach, this can comprise 3D printing the component as-designed in accordance with the design data derived in the method. It is also contemplated that the method may optionally include using the design parameter to physically construct the component as-designed.

In some approaches, the control circuit may generate one or more manufacturing parameters or parameters for a manufacturing device such as a 3D printer based on the expected fatigue strength of the component (or a portion or subvolume thereof). The manufacturing device may then manufacture the component as-designed according to the one or more manufacturing parameters in order to construct a physical component or part.

Turning to FIG. 6, an exemplary flow diagram illustrating analysis of a specimen 190 is shown. The analysis provides further detail on the analysis that is described with reference to block 170 to block 173 of FIG. 4 above. One or more specimens may be analyzed as shown in FIG. 6. The specimen 190 has a cellular structure and includes a plurality of cells.

An imaging device 192, such as a μCT scanner may acquire one or more images of the specimen 190. The one or more images may be used to reconstruct multiple 3D models 194 of the specimen 190. For example, the multiple 3D models 194 may be 3D models of each cell in the specimen 190. In another example, the multiple 3D models 194 may be 3D models of a volume of cells in the specimen 190. The 3D models may be finite element models of the specimen 190.

At block 196, a control circuit may then perform FEA analysis of the multiple 3D models 194 with period boundary conditions. It is contemplated that the FEA module may employ any other possible boundary conditions to mimic the homogenous material. The inputs to the FEA module at block 196 are the multiple 3D models 194, applied loads, and boundary conditions. The applied stress is applied in a homogenous way to the 3D models and, thus, it is a macroscopic applied stress. That is, a load is applied to the entire surface and/or volume of the 3D model versus to portions thereof. The outputs generated by the FEA module at block 196 are maps of local stresses in each of the multiple 3D models 194. The FEA module may simulate or apply various applied stresses to each (or some number) of the multiple 3D models 194 to generate the maps of local stresses.

At block 198, a control circuit may determine the homogenized fatigue strength for each (or some) of the multiple 3D models 194 based on the maps of local stresses generated at block 196. The most failure area in each 3D model reaches the fatigue strength for the 3D model. To obtain the homogenized fatigue strength, the control circuit applies a magnification to the local stress. The analysis is linear such that, if double applied stress doubles, the local stress doubles. The control circuit then determines the failure area of the 3D model that reaches the fatigue strength of the material of the specimen 190 (e.g., if the specimen 190 material such as an aluminum alloy the fatigue strength of the aluminum alloy would determine the failure area). The fatigue strength of the failure area would give the homogenized fatigue strength.

The procedure described at blocks 196 and 198 can be applied to any possible homogenized stress state.

At block 199, the control circuit generates a probability distribution function of fatigue strength for the multiple 3D models 194 using the results from the analysis of each of the multiple 3D models 194. Example results from such an analysis are presented, for example, in FIG. 7 at lines 200 and 202.

The control circuit may then utilize the probability distribution function to determine an expected fatigue strength for a component or a portion of subvolume thereof. The control circuit may generate one or more manufacturing parameters or parameters for a manufacturing device such as a 3D printer based on the expected fatigue strength of the component (or a portion or subvolume thereof). The manufacturing device may then manufacture the component as-designed according to the one or more manufacturing parameters in order to construct a physical component or part.

FIGS. 7-8 provide an exemplary analysis of specimens to determine an expected fatigue strength for an as-manufactured component having a cellular structure. The analysis depicted in FIGS. 7-8 was performed using the single cell model 182, the 8-cell volume model 184, and the experimental specimen 186 depicted in FIG. 5.

FIG. 7 depicts Weibull probability plots of the fatigue limit ($\sigma_{lim}$) based on single cell specimens (e.g., the single cell model 182), volume specimens (e.g., the 8-cell volume model 184), and the experimental specimen 186. The fatigue limit ($\sigma_{lim}$) measures the limit stress at which failure occurs for an infinite number of fatigue cycles.

Line 200 depicts simulation data for the fatigue limit ($\sigma_{lim}$). The simulation data in line 200 is derived from FEA simulations on the single cell models (1... M). The circular data points of line 200 each represent the simulation results from a distinct single cell model (e.g., results from each specimen-FEA simulation of the single cell model 2, the single cell model 3, etc. through the single cell model M). In particular, each circular data point represents the lowest fatigue limit ($\sigma_{lim}$) value in the single cell model as determined via FEA simulation. For example, the lowest fatigue limit ($\sigma_{lim}$) in the single cell model 182 is at failure area 182a. Failure areas for each single cell model (1... M) are determined and the fatigue limit at the failure areas used to construct line 200. The lowest fatigue limit ($\sigma_{lim}$) value is the fatigue limit ($\sigma_{lim}$) at the failure areas in the single cell model. Each distinct single cell model is obtained by manufacturing and acquiring images of a single cell to construct a 3D model of the real cell geometry. The 3D model of the real cell geometry is then analyzed using FEA simulation to estimate the fatigue limit of the single cell for each specimen, or at least some of the specimens. Thus, the simulation data in line 200 provides the cell-to-cell variability of the fatigue limit ($\sigma_{lim}$).

Line 202 provides a probability distribution of the fatigue limit ($\sigma_{lim}$) for a single cell. Line 202 is fitted to the single cell simulation data of line 200. That is, line 202 is the best fit of the data in line 200.

Line 204 depicts simulation data for the fatigue limit ($\sigma_{lim}$). The simulation data in line 200 is derived from FEA simulations on the 8-cell volume models (1...N). The square data points of line 204 each represent the simulation results from a distinct 8-cell volume model (e.g., results from FEA simulation of each specimen-8-cell model 2, the 8-cell model 3, etc. through the 8-cell model N). In particular, each square data point represents the lowest fatigue limit ($\sigma_{lim}$) value in the 8-cell volume model as determined via FEA simulation. The lowest fatigue limit ($\sigma_{lim}$) value is the fatigue limit ($\sigma_{lim}$) at the failure area in the 8-cell volume model. For example, the lowest fatigue limit ($\sigma_{lim}$) in the 8-cell volume model 184 is at failure area 184a. Failure areas for each 8-cell volume mode (1... N) would be determined and the fatigue limit at the failure areas used to construct line 204. Each distinct 8-cell volume model is obtained by manufacturing and acquiring images of an 8-cell volume to construct a 3D model of the real cell geometry. The 3D model of the real cell geometry is then analyzed using FEA simulation to estimate the fatigue limit ($\sigma_{lim}$) of the 8-cell volume for each specimen, or at least some of the specimens.

Line 206 provides statistical estimations of the fatigue limit ($\sigma_{lim}$) for the 8-cell volume based on statistics of extremes. Line 206 was obtained using the following formula: $F_8 = F_1{}^8$, where $F_1$ is the function represented by line 202. Thus, line 204 provides a distribution of fatigue limit($\sigma_{lim}$) obtained by simulation while line 206 provides a distribution of fatigue limit ($\sigma_{lim}$) for the 8-cell volume obtained numerically. A comparison of line 204 with line 206 illustrates that the predicted fatigue limit ($\sigma_{lim}$) of the 8-cell volume using statistics of extremes is well aligned with the fatigue limit ($\sigma_{lim}$) data is derived from FEA simulations of 8-cell volume model, which captures the real cell geometry. Thus, the extrapolation performed using statistics of extremes is validated by simulations of the real cell geometry.

Line 208 depicts the experimental distribution of fatigue limit ($\sigma_{lim}$) for the experimental specimen 186. The data for line 208 is obtained by subjecting the experimental specimen 186 to fatigue testing. Any suitable fatigue testing device may be used to perform fatigue testing.

Line 210 provides estimates of the fatigue limit ($\sigma_{lim}$) for the experimental specimen 186 of 360 cells based on statistics of extremes using the following formula: $F_{360} = F_1^{\ 360}$, where $F_1$ is the function represented by line 202. Thus, line 208 provide a distribution of fatigue limit ($\sigma_{lim}$) obtained experimentally while line 210 provides a distribution of fatigue limit ($\sigma_{lim}$) obtained numerically using statistics of extremes. A comparison of line 208 with line 210 illustrates that the predicted fatigue limit ($\sigma_{lim}$) of the experimental specimen 186 using statistics of extremes is well aligned with the fatigue limit ($\sigma_{lim}$) data is derived from fatigue testing of the experimental specimen 186, which captures the real cell geometry. Thus, the extrapolation performed using statistics of extremes is validated by experimental data.

FIG. 8 depicts a graph of fatigue strength as a function of the number of cells in a component. The graph illustrates the effect of the real cell geometry as compared to the analytical cell geometry (e.g., the cell geometry as-designed). Line 230 provides the fatigue strength of the bulk material, that is, with no stress concentration. Line 232 provides the fatigue strength of the cells as-designed. Line 234 provides the fatigue strength of cells as-manufactured (e.g., as-built). Further, line 234 includes confidence bands, illustrating the 95% confidence interval, for the fatigue strength of cells as-manufactured. The fatigue strength values of line 234 were determined using the methods described herein.

The fatigue strength of cells as-manufactured (line 234) is lower than the fatigue strength of cells as-designed (line 232). As discussed above, this is due to effects of the manufacturing process, such as deviations introduced via the manufacturing process. Further, the fatigue strength of cells as-designed (line 232) is lower than the fatigue strength of the bulk material (line 230). This is due to the effects of the cell geometry on fatigue strength.

FIG. 9A depicts an exemplary S-N diagram generated via the methods described herein. The fatigue stress will depend on the material and geometry of the cellular structure. Using an FEA module which has been homogenized, it is possible to obtain a number of cycles to failure (Ncycles) based on a number of cells (Ncells) in a cellular structure and based on the homogenized stress (S) on the component subvolume. Thus, the FEA module is of a modeled component has been homogenized with an equivalent homogenous material that is representative of the cellular structure. The FEA module may be used to generate the fatigue strength value for the modeled component as a function of the number of cycles to failure (Ncycles). The number of cycles to failure (Ncycles) may be generated as function of the number of cells in a component (Ncells) and applied stress (S) on the component:

Ncycles = f (Ncells, S)

The fatigue strength (which may be used to generate the S-N curve) is a function of the number of cells (Ncells). Accordingly, the S-N curve will vary based on the number of cells (Ncells) in the component, with the stresses in the S-N shifting lower as the number of cells (Ncells) in the component increases. Thus, a particular S-N curve may be employed to assess the fatigue strength of a target component based on the number of cells in the target component. Using the S-N curves of FIG. 9A, it is possible to determine the number of cycles to failure for a component based on the S-N curve, knowing homogenized stress on the target component and the number of cells in the target component. The component life corresponds with the number of cycles to failure (Ncycles). Different regions of a component will have different homogenized stresses and, accordingly, have a different number of cycles to failure (Ncycles). A failure area of the component is the region having the lowest number of cycles to failure, as this is the region of the component that will be first to fail. In this manner, determining the weakest link of the component predicts failure of the component as a whole.

FIG. 9B depicts a graph of fatigue stress as function of the number of the cells in the cellular structure. The curves in FIG. 9B illustrate fatigue stress as a function of the number of cells in a component for various regions of the S-N curves illustrated in FIG. 9A. For the finite life region, a number of cells of a cellular structure will tolerate lower stresses for a larger number of cycles (e.g., 300k cycles) and may tolerate higher stresses for a lower number of cycles (e.g., 30k) before failing. For the infinite life region, a number of cells of a cellular structure will tolerate an even lower stress for a very large number of cycles (e.g., the infinite life).

It is contemplated that the curves depicted in FIG. 9B may be generated in a manner similar to that described for line 234 in FIG. 8.

The systems and methods described herein may be employed to analyze cellular structures or other lattice structures manufactured, for example, via additive manufacturing. Due to the large number of cells in a component having a cellular structure, prior analytical methods of determining an expected fatigue strength for a target component were computationally expensive in computing power and time. By employing finite element analysis with periodic boundary conditions, homogenization of a finite element analysis model, the methods described here may reduce the computational effort involved in analytical methods for determining expected fatigue strength for a target component. Further, the systems and methods described herein allow the fatigue strength for an entire target component to be predicted or determined based on the analysis of fatigue strength for a smaller number of cells (e.g., a single cell or a subvolume of cells) by employing statistical tools that extrapolate properties of the smaller number of cells to the entire target component.

Further aspects of the disclosure are provided by the subject matter of the following clauses:

A computer-implemented method comprising: receiving image data for a specimen from an imaging device, the specimen including a plurality of cells of cellular structure as-manufactured; reconstructing a plurality of three-dimensional models of the specimen using the image data, the plurality of three-dimensional models each including a given volume of the specimen; determining local stresses for at least one of the plurality of three-dimensional models for a given applied stress via finite element analysis with periodic boundary conditions; determining a fatigue strength for the at least one of the plurality of three-dimensional models based on the local stresses to generate a probability distribution function for the given volume of the specimen; predicting an expected fatigue strength for a volume comprising a number of cells of a cellular structure by applying statistics of extremes to the probability distribution function for the given volume of the specimen; and causing a manufacturing device to form a part based on the expected fatigue strength.

The computer-implemented method of any preceding clause, further comprising: identifying properties of an equivalent homogenous material representative of the cellular structure; performing an analysis of stress for a target component to generate a spatial distribution of stress on the target component, wherein a cellular structure of the target component is substituted with the equivalent homogenous material; discretizing the target component into a plurality of subvolumes based on the spatial distribution of stress; and performing a fatigue assessment for at least some of the plurality of subvolumes by comparing a stress on a subvolume with the expected fatigue strength for the number of cells in the subvolume.

The computer-implemented method of any preceding clause, further comprising: applying weakest link analysis to the plurality of subvolumes, wherein the weakest link analysis includes: determining a failure area in the target component based on the fatigue strength for the plurality of subvolumes and the stress on the plurality of subvolumes; and determining the fatigue strength for the target component based on the failure area.

The computer-implemented method of any preceding clause, wherein the analysis of stress for the target component is performed via a finite element analysis model of the target component that has been homogenized with the equivalent homogenous material.

The computer-implemented method of any preceding clause, wherein the properties are elastic properties.

The computer-implemented method of any preceding clause, wherein the fatigue strength is an infinite life fatigue strength.

The computer-implemented method of any preceding clause, wherein the cellular structure is a lattice structure.

The computer-implemented method of any preceding clause, further comprising: generating a design parameter for a component including the cellular structure based on the expected fatigue strength, wherein the manufacturing device forms the part based on the design parameter.

The computer-implemented method of any preceding clause, further comprising: scanning a specimen including a plurality of cells of a cellular structure using an imaging device to generate the image data, the imaging device configured to acquire images of the cellular structure.

The computer-implemented method of any preceding clause, wherein the specimen is manufactured via an additive manufacturing device, and wherein the imaging device is an x-ray micro computed tomography ($\mu$CT) scanner .

The computer-implemented method of any preceding clause, further comprising: determining a number of cycles to failure for a target component based on the local stresses and a target number of cells in the target component.

The computer-implemented method of any preceding clause, wherein the image data is obtained from an x-ray micro computed tomography scanner that is configured to scan the specimen.

The computer-implemented method of any preceding clause, wherein the expected fatigue strength of the number of cells in the cellular structure is predicted via a formula as follows: $F_T = F_N^{(T/N)}$ wherein T is the number of cells in the cellular structure, FT is a cumulative distribution function for the expected fatigue strength of the number of cells, N is a number of cells in each specimen, wherein N can be 1 or larger, and FN is the cumulative distribution function for the number of cells in each specimen.

A system for predicting fatigue strength, the system comprising: at least one imaging device; at least one processor in communication with the at least one imaging device; and a memory device, the memory device storing instructions that when executed by the at least one processor causes the at least one processor to perform operations, the at least one processor configured to: receive image data for a specimen, the specimen including a plurality of cells of cellular structure from the at least one imaging device; reconstruct a plurality of three-dimensional models of the specimen using the image data, the plurality of three-dimensional models each including a given volume of the specimen; determine local stresses for at least one of the plurality of three-dimensional models for a given applied stress via finite element analysis with periodic boundary conditions; determine a fatigue strength for the at least one of the plurality of three-dimensional models based on the local stresses to generate a probability distribution function for the given volume of the specimen; and predict an expected fatigue strength for a volume comprising a number of cells of a cellular structure by applying statistics of extremes to the probability distribution function for the given volume of the specimen.

The system of clause any preceding clause, wherein the at least one processor is further configured to: identify properties of an equivalent homogenous material representative of the cellular structure; perform an analysis of stress for a target component to generate a spatial distribution of stress on the target component, wherein a structure of the target component is substituted with the equivalent homogenous material; discretize the target component into a plurality of subvolumes based on the spatial distribution of stress; and perform a fatigue assessment for at least some of the plurality of subvolumes by comparing a stress on a subvolume with the expected fatigue strength for the number of cells in the subvolume.

The system of any preceding clause, wherein the at least one processor is further configured to: generate a design parameter for a component including the cellular structure based on the expected fatigue strength; and manufacture, via at least one manufacturing device in communication with the at least one processor, the component as-designed according to the design parameter.

The system of any preceding clause, wherein the at least one processor is further configured to transmit at least one signal to a manufacturing device, wherein the at least one signal is indicative of instructions for manufacturing a component including the cellular structure, the instructions based on the expected fatigue strength of the number of cells in the cellular structure as-manufactured.

The system of any preceding clause, wherein the system further includes at least on testing device configured to acquire a measured fatigue strength of the specimen, and wherein the processor is further configured to compare the measured fatigue strength to the expected fatigue strength to determine an amount of error in the expected fatigue strength.

A computer-implemented method comprising: causing an imaging device to scan a specimen including a plurality of cells of a cellular structure, the scan generating image data for the specimen; reconstructing a plurality of three-dimensional models of the specimen, the plurality of three-dimensional models each including a given volume of the specimen; determining local stresses for at least one of the plurality of three-dimensional models for a given applied stress via finite element analysis with periodic boundary conditions; determining a fatigue strength for the at least one of the plurality of three-dimensional models based on the local stresses to generate a probability distribution function for the given volume of the specimen; and predicting an expected fatigue strength for a volume comprising a number of cells of the cellular structure by applying statistics of extremes to the probability distribution function for the given volume of the specimen.

The computer-implemented method of any preceding clause, further comprising causing a manufacturing device to form a part based on the expected fatigue strength.

**Claims**

1. A computer-implemented method comprising:

    receiving image data (128) for a specimen (103, 190) from an imaging device (106, 192), the specimen (103, 190) including a plurality of cells (104) of cellular structure as-manufactured;
    reconstructing a plurality of three-dimensional models (112) of the specimen (103, 190) using the image data (128), the plurality of three-dimensional models (112) each including a given volume of the specimen (103, 190);
    determining local stresses for at least one of the plurality of three-dimensional models (112) for a given applied stress via finite element analysis with periodic boundary conditions;
    determining a fatigue strength for the at least one of the plurality of three-dimensional models (112) based on the local stresses to generate a probability distribution function for the given volume of the specimen (103, 190);
    predicting an expected fatigue strength for a volume comprising a number of cells (104) of a cellular structure by applying statistics of extremes (152) to the probability distribution function for the given volume of the specimen (103, 190); and
    causing a manufacturing device to form a part based on the expected fatigue strength.

2. The computer-implemented method of claim 1, further comprising:

    identifying properties of an equivalent homogenous material representative of the cellular structure;
    performing an analysis of stress for a target component (102) to generate a spatial distribution of stress on the target component (102), wherein a structure of the target component (102) is substituted with the equivalent homogenous material;
    discretizing the target component (102) into a plurality of subvolumes based on the spatial distribution of stress; and
    performing a fatigue assessment for at least one of the plurality of subvolumes by comparing a stress on a subvolume with the expected fatigue strength for the number of cells (104) in the subvolume.

3. The computer-implemented method of claims 1 or 2, further comprising:
applying weakest link analysis to the plurality of subvolumes, wherein the weakest link analysis includes: determining a failure area in the target component (102) based on the fatigue strength for the plurality of subvolumes and the stress on the plurality of subvolumes; and determining the fatigue strength for the target component (102) based on the failure area.

**4.** The computer-implemented method of any preceding claim, wherein the analysis of stress for the target component (102) is performed via a finite element analysis model (114) of the target component (102) that has been homogenized with the equivalent homogenous material.

**5.** The computer-implemented method of any preceding claim, further comprising:
generating a design parameter for a component (102) including the cellular structure based on the expected fatigue strength, wherein the manufacturing device forms the part based on the design parameter.

**6.** The computer-implemented method of any preceding claim, further comprising:
scanning a specimen including a plurality of cells of a cellular structure using an imaging device (106, 192) to generate the image data, the imaging device (106, 192) configured to acquire images of the cellular structure.

**7.** The computer-implemented method of any preceding claim, wherein the specimen is manufactured via an additive manufacturing device, and wherein the imaging device (106, 192) is an x-ray micro computed tomography (μCT) scanner.

**8.** The computer-implemented method of any preceding claim, further comprising:
determining a number of cycles to failure for a target component (102) based on the local stresses and a target number of cells (104) in the target component (102).

**9.** The computer-implemented method of any preceding claim, wherein the image data (128) is obtained from an x-ray micro computed tomography scanner that is configured to scan the specimen (103, 190).

**10.** The computer-implemented method of any preceding claim, wherein the expected fatigue strength of the number of cells (104) in the cellular structure is predicted via a formula as follows:

$$F_T = F_N^{(T/N)}$$

wherein T is the number of cells (104) in the cellular structure,
$F_T$ is a cumulative distribution function for the expected fatigue strength of the number of cells (104),
N is a number of cells (104) in each specimen (103, 190), wherein N can be 1 or larger, and $F_N$ is the cumulative distribution function for the number of cells (104) in each specimen (103, 190).

**11.** A system (100) for predicting fatigue strength for a component (102), the system (100) comprising:

at least one imaging device (106, 192);
at least one processor in communication with the at least one imaging device (106, 192); and
a memory device, the memory device storing instructions (130) that when executed by the at least one processor causes the at least one processor to perform operations, the at least one processor configured to:

receive image data (128) for a specimen (103, 190) including a plurality of cells (104) of cellular structure from the at least one imaging device (106, 192);
reconstruct a plurality of three-dimensional models (112) of the specimen (103, 190) using the image data (128), the plurality of three-dimensional models (112) each including a given volume of the specimen (103, 190);
determine local stresses for at least one of the plurality of three-dimensional models (112) for a given applied stress via finite element analysis with periodic boundary conditions;
determine a fatigue strength for the at least one of the plurality of three-dimensional models (112) based on the local stresses to generate a probability distribution function for the given volume of the specimen (103, 190); and
predict an expected fatigue strength for a volume comprising a number of cells (104) of a cellular structure by applying statistics of extremes (152) to the probability distribution function for the given volume of the specimen (103, 190).

**12.** The system (100) of claim 11, wherein the at least one processor is further configured to:

identify properties of an equivalent homogenous material representative of the cellular structure;
perform an analysis of stress for a target component (102) to generate a spatial distribution of stress on the target component (102), wherein a cellular structure of the target component (102) is substituted with the equivalent homogenous material;

discretize the target component (102) into a plurality of subvolumes based on the spatial distribution of stress; and

perform a fatigue assessment for at least one of the plurality of subvolumes by comparing a stress on a subvolume with the expected fatigue strength for the number of cells (104) in the subvolume.

**13.** The system (100) of claims 11 or 12, wherein the at least one processor is further configured to:

generate a design parameter for a component (102) including the cellular structure based on the expected fatigue strength; and

manufacture, via at least one manufacturing device (105) in communication with the at least one processor, the component (102) as-designed according to the design parameter.

**14.** The system (100) of any preceding claim, wherein the at least one processor is further configured to transmit at least one signal to a manufacturing device (105), wherein the at least one signal is indicative of instructions (130) for manufacturing a component (102) including the cellular structure, the instructions (130) based on the expected fatigue strength of a number of cells (104) in the cellular structure as-manufactured.

**15.** The system (100) of any preceding claim, wherein the image data (128) is received from at least one imaging device (106, 192) in communication with the at least one processor.

FIG. 1A

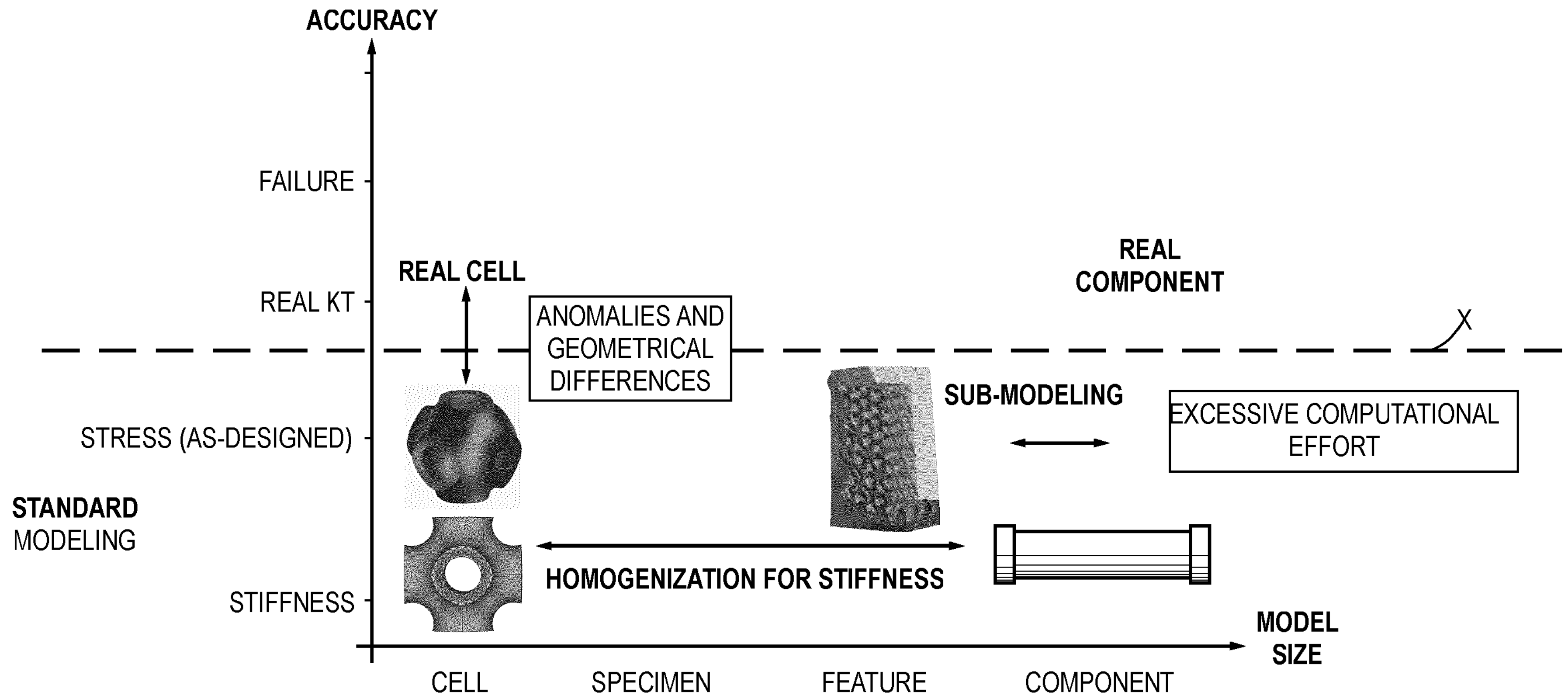
ACCURACY
FAILURE
REAL KT
STRESS (AS-DESIGNED)
STIFFNESS
STANDARD
MODELING
REAL CELL
ANOMALIES AND GEOMETRICAL DIFFERENCES
REAL COMPONENT
X
SUB-MODELING
EXCESSIVE COMPUTATIONAL EFFORT
HOMOGENIZATION FOR STIFFNESS
MODEL SIZE
CELL
SPECIMEN
FEATURE
COMPONENT

FIG. 1B

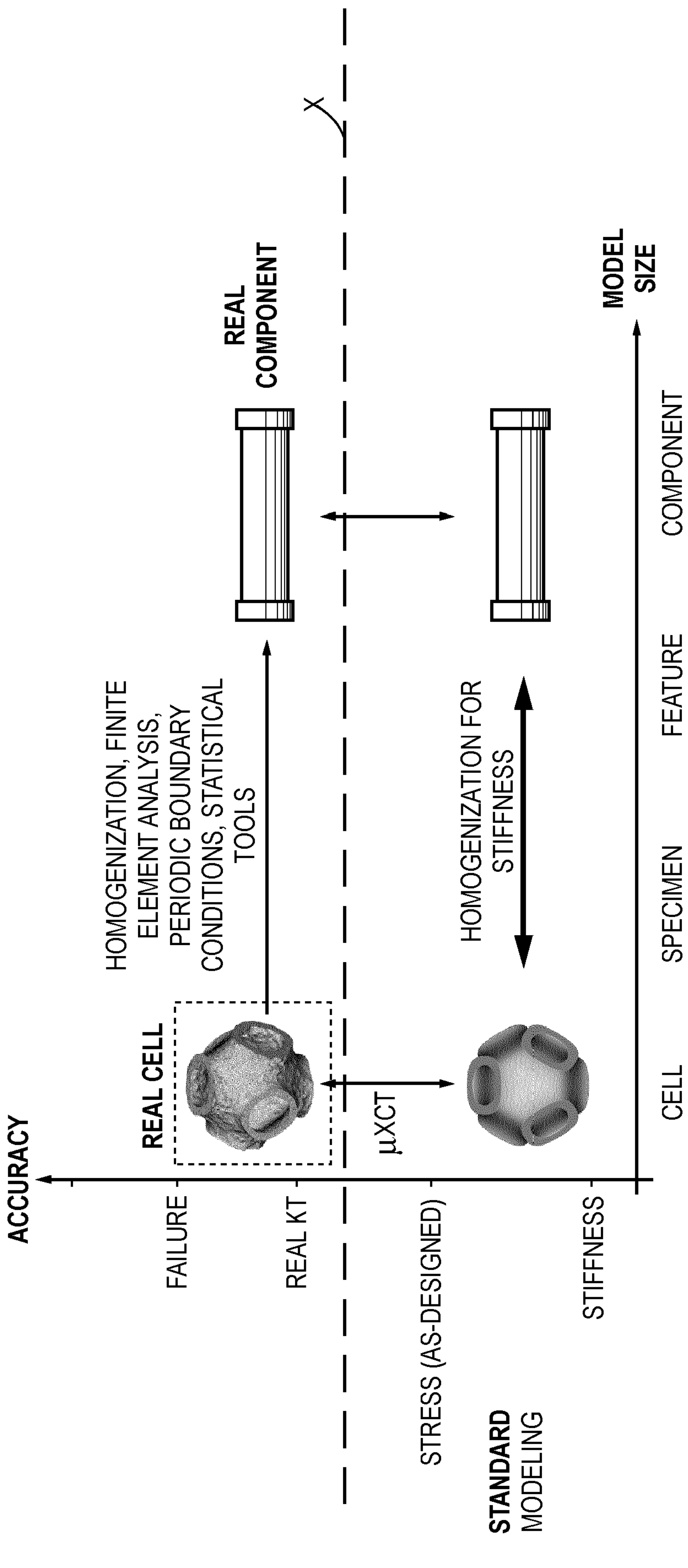
ACCURACY
FAILURE
REAL KT
STRESS (AS-DESIGNED)
STIFFNESS
STANDARD
MODELING
REAL CELL
μXCT
HOMOGENIZATION, FINITE ELEMENT ANALYSIS, PERIODIC BOUNDARY CONDITIONS, STATISTICAL TOOLS
HOMOGENIZATION FOR STIFFNESS
REAL COMPONENT
CELL
SPECIMEN
FEATURE
COMPONENT
MODEL SIZE

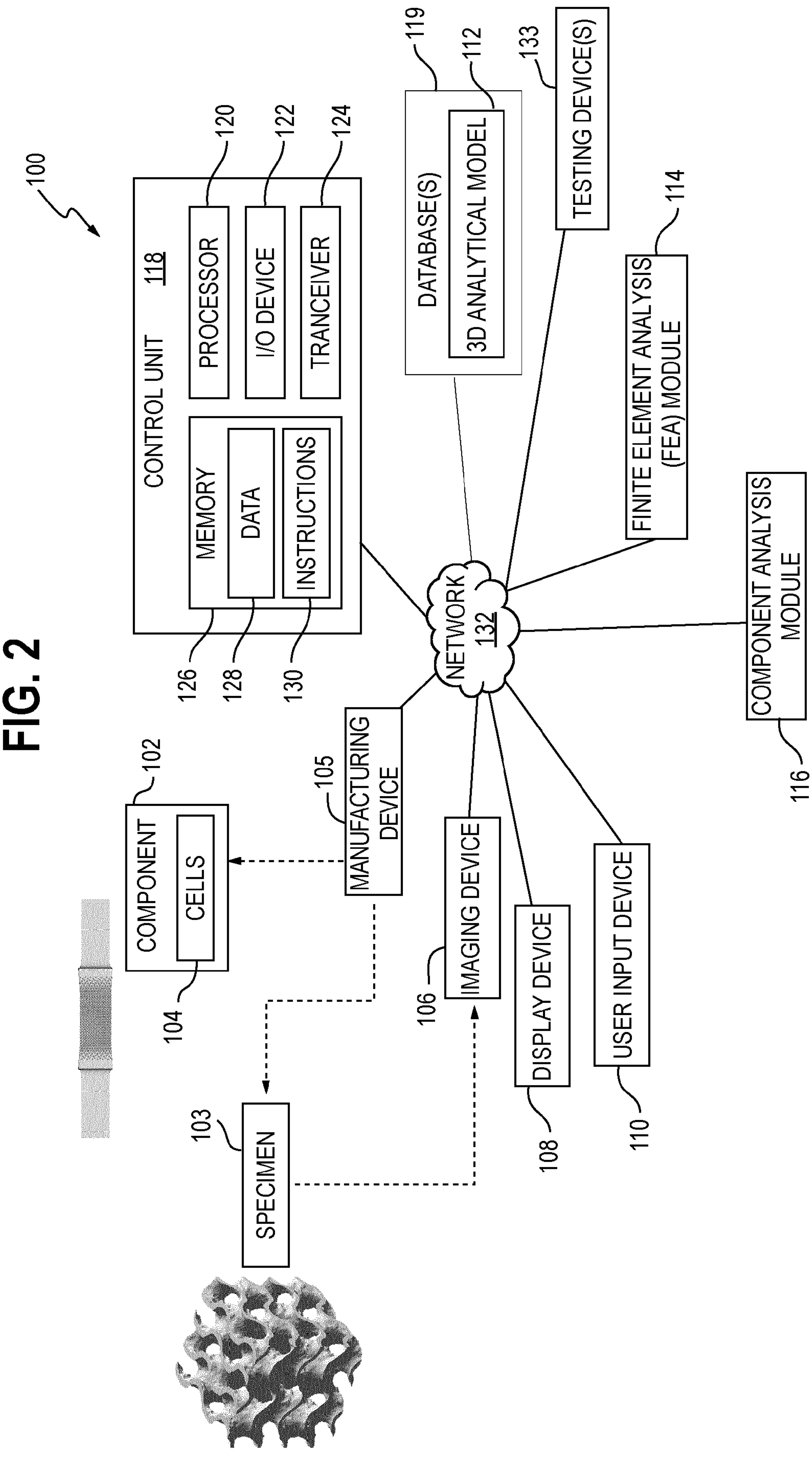
100
CONTROL UNIT 118
PROCESSOR
120
I/O DEVICE
122
TRANCEIVER
124
MEMORY
DATA
INSTRUCTIONS
126
128
130
DATABASE(S)
119
3D ANALYTICAL MODEL
112
TESTING DEVICE(S)
133
FINITE ELEMENT ANALYSIS (FEA) MODULE
114
COMPONENT ANALYSIS MODULE
116
NETWORK 132
MANUFACTURING DEVICE
105
COMPONENT
102
CELLS
104
SPECIMEN
103
IMAGING DEVICE
106
DISPLAY DEVICE
108
USER INPUT DEVICE
110

FIG. 2

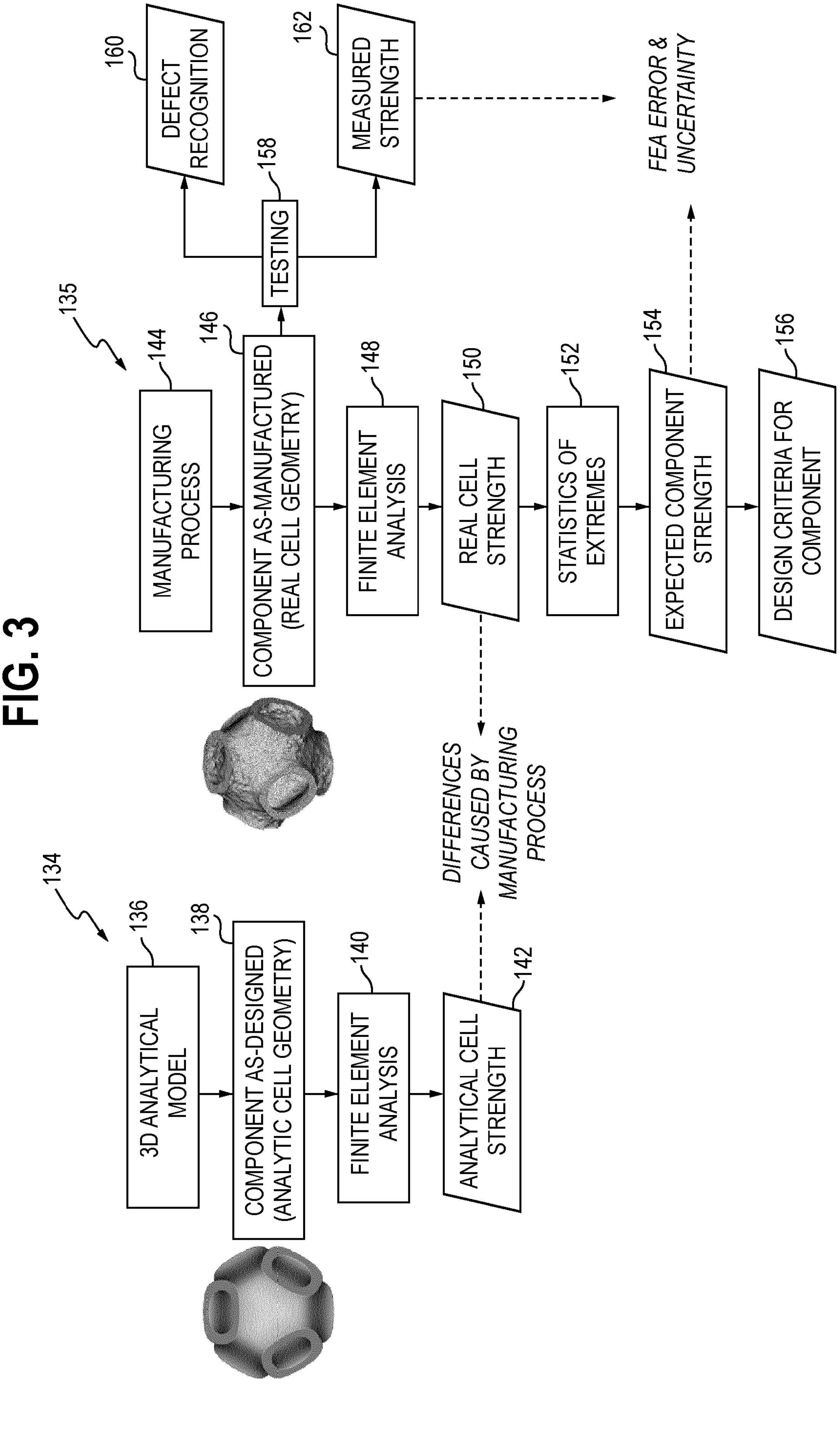
134
136
3D ANALYTICAL MODEL
138
COMPONENT AS-DESIGNED (ANALYTIC CELL GEOMETRY)
140
FINITE ELEMENT ANALYSIS
142
ANALYTICAL CELL STRENGTH
DIFFERENCES CAUSED BY MANUFACTURING PROCESS
135
144
MANUFACTURING PROCESS
146
COMPONENT AS-MANUFACTURED (REAL CELL GEOMETRY)
148
FINITE ELEMENT ANALYSIS
150
REAL CELL STRENGTH
152
STATISTICS OF EXTREMES
154
EXPECTED COMPONENT STRENGTH
156
DESIGN CRITERIA FOR COMPONENT
158
TESTING
160
DEFECT RECOGNITION
162
MEASURED STRENGTH
FEA ERROR & UNCERTAINTY

FIG. 3

FIG. 4

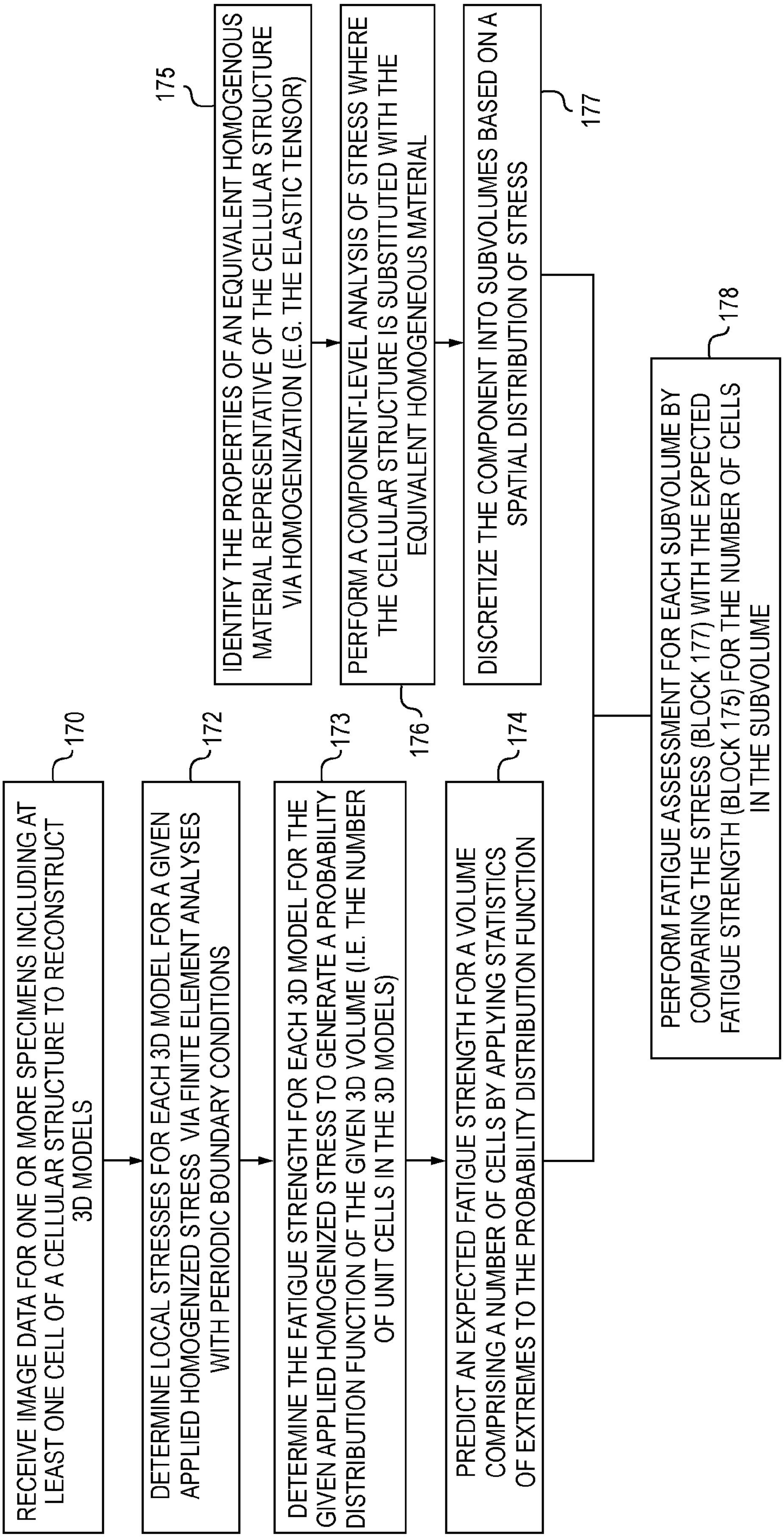
RECEIVE IMAGE DATA FOR ONE OR MORE SPECIMENS INCLUDING AT LEAST ONE CELL OF A CELLULAR STRUCTURE TO RECONSTRUCT 3D MODELS
170
DETERMINE LOCAL STRESSES FOR EACH 3D MODEL FOR A GIVEN APPLIED HOMOGENIZED STRESS VIA FINITE ELEMENT ANALYSES WITH PERIODIC BOUNDARY CONDITIONS
172
DETERMINE THE FATIGUE STRENGTH FOR EACH 3D MODEL FOR THE GIVEN APPLIED HOMOGENIZED STRESS TO GENERATE A PROBABILITY DISTRIBUTION FUNCTION OF THE GIVEN 3D VOLUME (I.E. THE NUMBER OF UNIT CELLS IN THE 3D MODELS)
173
PREDICT AN EXPECTED FATIGUE STRENGTH FOR A VOLUME COMPRISING A NUMBER OF CELLS BY APPLYING STATISTICS OF EXTREMES TO THE PROBABILITY DISTRIBUTION FUNCTION
174
IDENTIFY THE PROPERTIES OF AN EQUIVALENT HOMOGENOUS MATERIAL REPRESENTATIVE OF THE CELLULAR STRUCTURE VIA HOMOGENIZATION (E.G. THE ELASTIC TENSOR)
175
PERFORM A COMPONENT-LEVEL ANALYSIS OF STRESS WHERE THE CELLULAR STRUCTURE IS SUBSTITUTED WITH THE EQUIVALENT HOMOGENEOUS MATERIAL
176
DISCRETIZE THE COMPONENT INTO SUBVOLUMES BASED ON A SPATIAL DISTRIBUTION OF STRESS
177
PERFORM FATIGUE ASSESSMENT FOR EACH SUBVOLUME BY COMPARING THE STRESS (BLOCK 177) WITH THE EXPECTED FATIGUE STRENGTH (BLOCK 175) FOR THE NUMBER OF CELLS IN THE SUBVOLUME
178

# FIG. 5

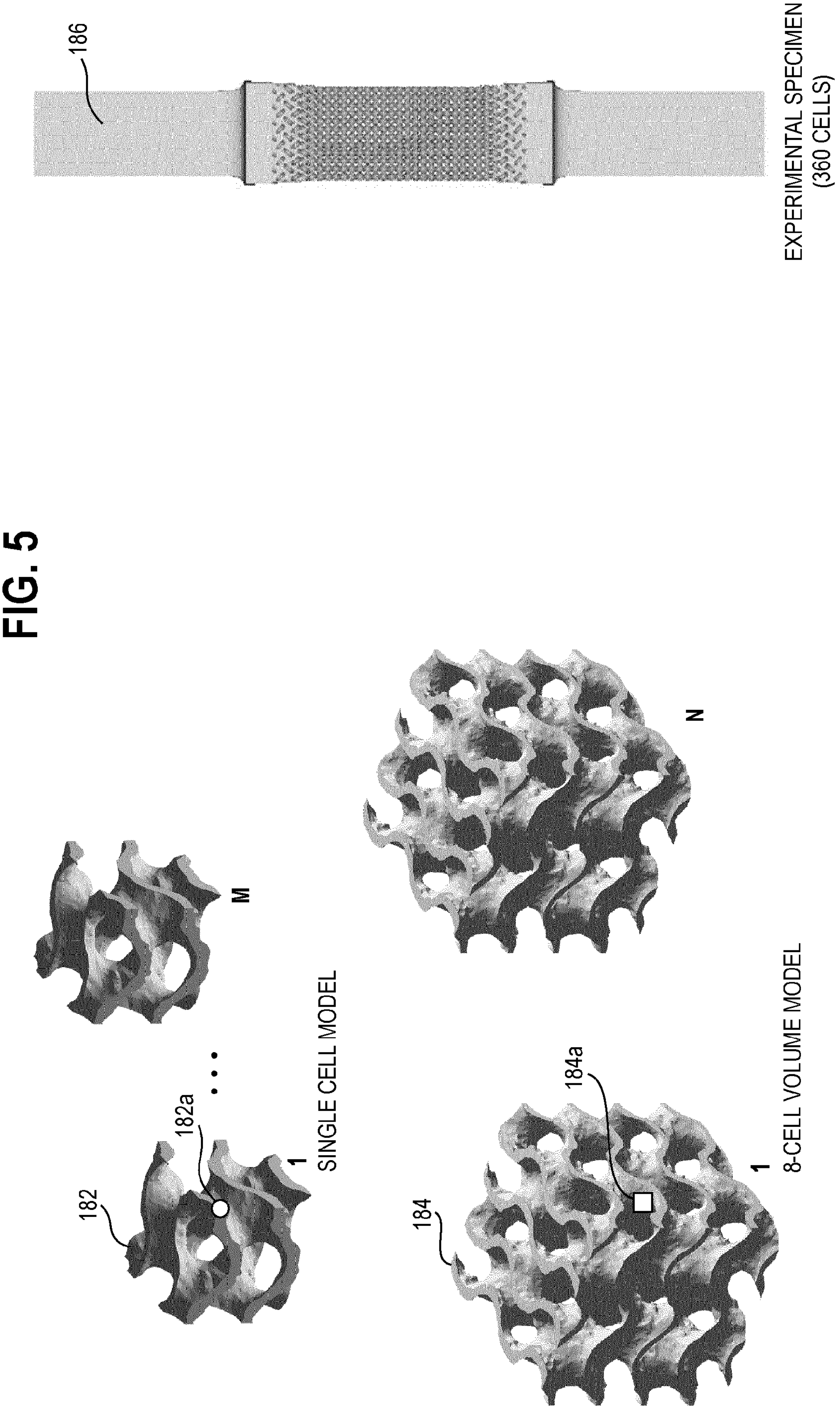
186
EXPERIMENTAL SPECIMEN
(360 CELLS)
182
182a
1
M
SINGLE CELL MODEL
184
184a
1
N
8-CELL VOLUME MODEL

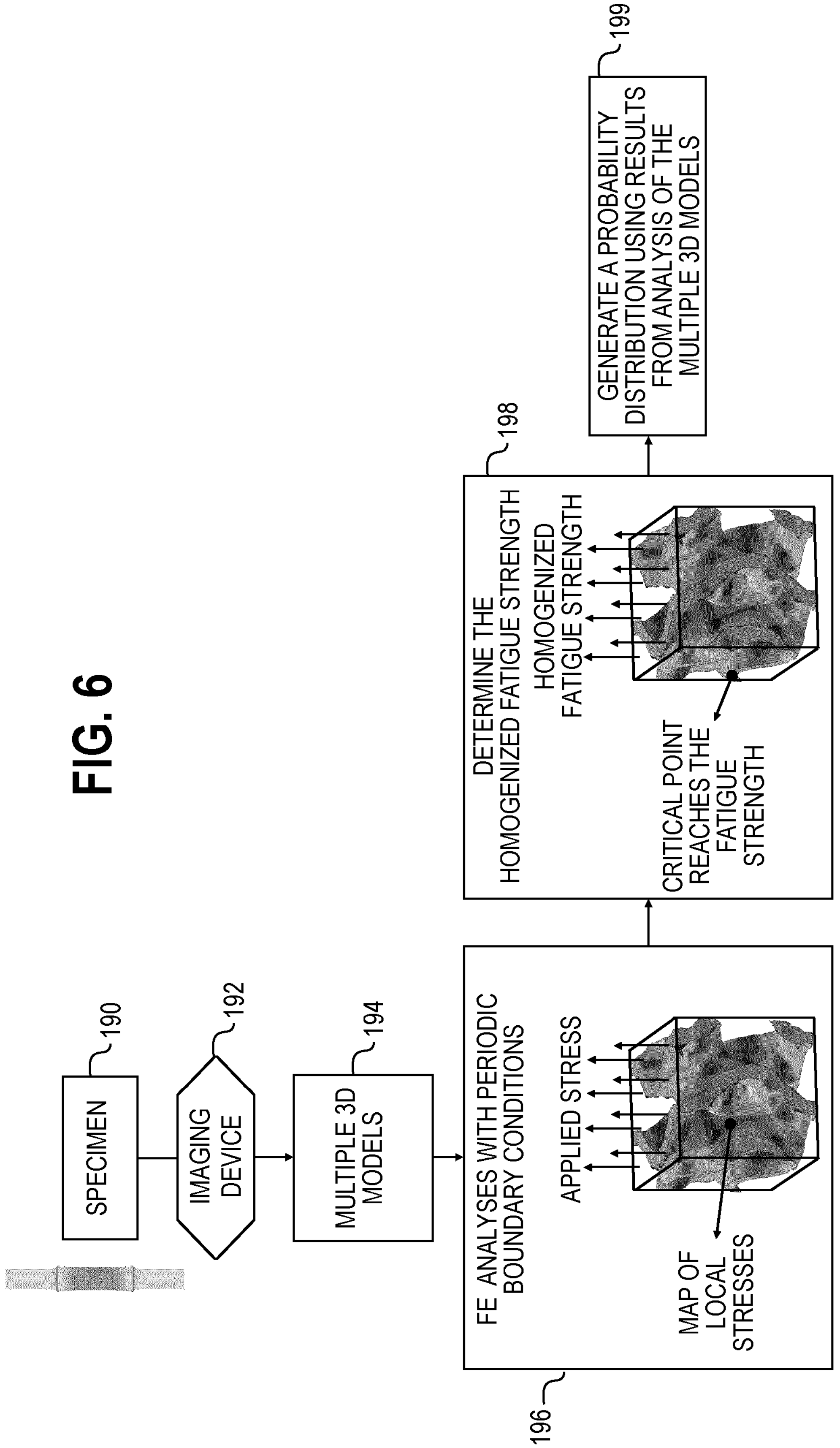
SPECIMEN
190
IMAGING DEVICE
192
MULTIPLE 3D MODELS
194
FE ANALYSES WITH PERIODIC BOUNDARY CONDITIONS
APPLIED STRESS
MAP OF LOCAL STRESSES
196
DETERMINE THE HOMOGENIZED FATIGUE STRENGTH
HOMOGENIZED FATIGUE STRENGTH
CRITICAL POINT REACHES THE FATIGUE STRENGTH
198
GENERATE A PROBABILITY DISTRIBUTION USING RESULTS FROM ANALYSIS OF THE MULTIPLE 3D MODELS
199

FIG. 6

FIG. 7

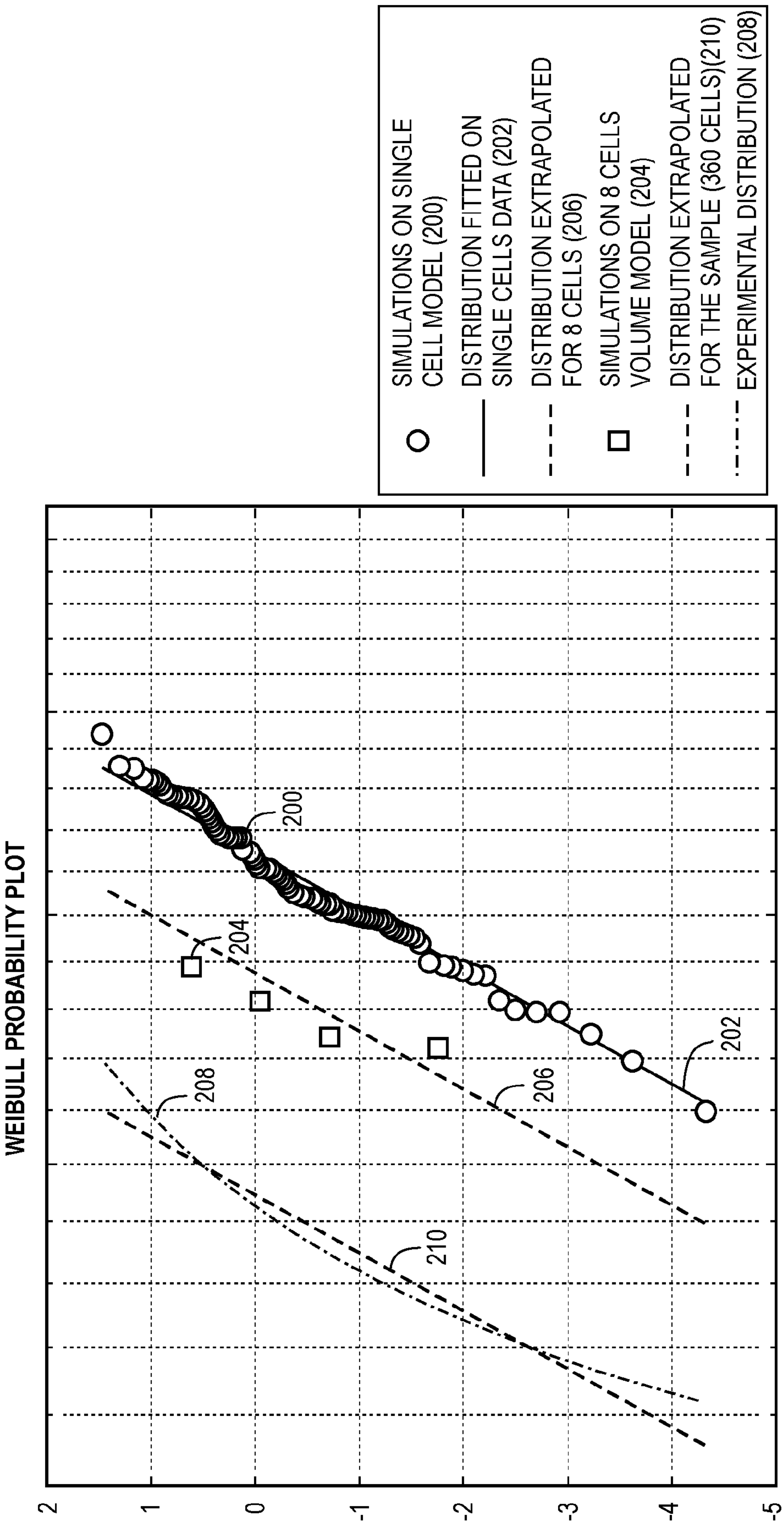
WEIBULL PROBABILITY PLOT
log(-log(1-q))[ - ]
2
1
0
-1
-2
-3
-4
-5
15
20
25
30
35
σlim [MPa]
200
202
204
206
208
210
SIMULATIONS ON SINGLE CELL MODEL (200)
DISTRIBUTION FITTED ON SINGLE CELLS DATA (202)
DISTRIBUTION EXTRAPOLATED FOR 8 CELLS (206)
SIMULATIONS ON 8 CELLS VOLUME MODEL (204)
DISTRIBUTION EXTRAPOLATED FOR THE SAMPLE (360 CELLS)(210)
EXPERIMENTAL DISTRIBUTION (208)

FIG. 8

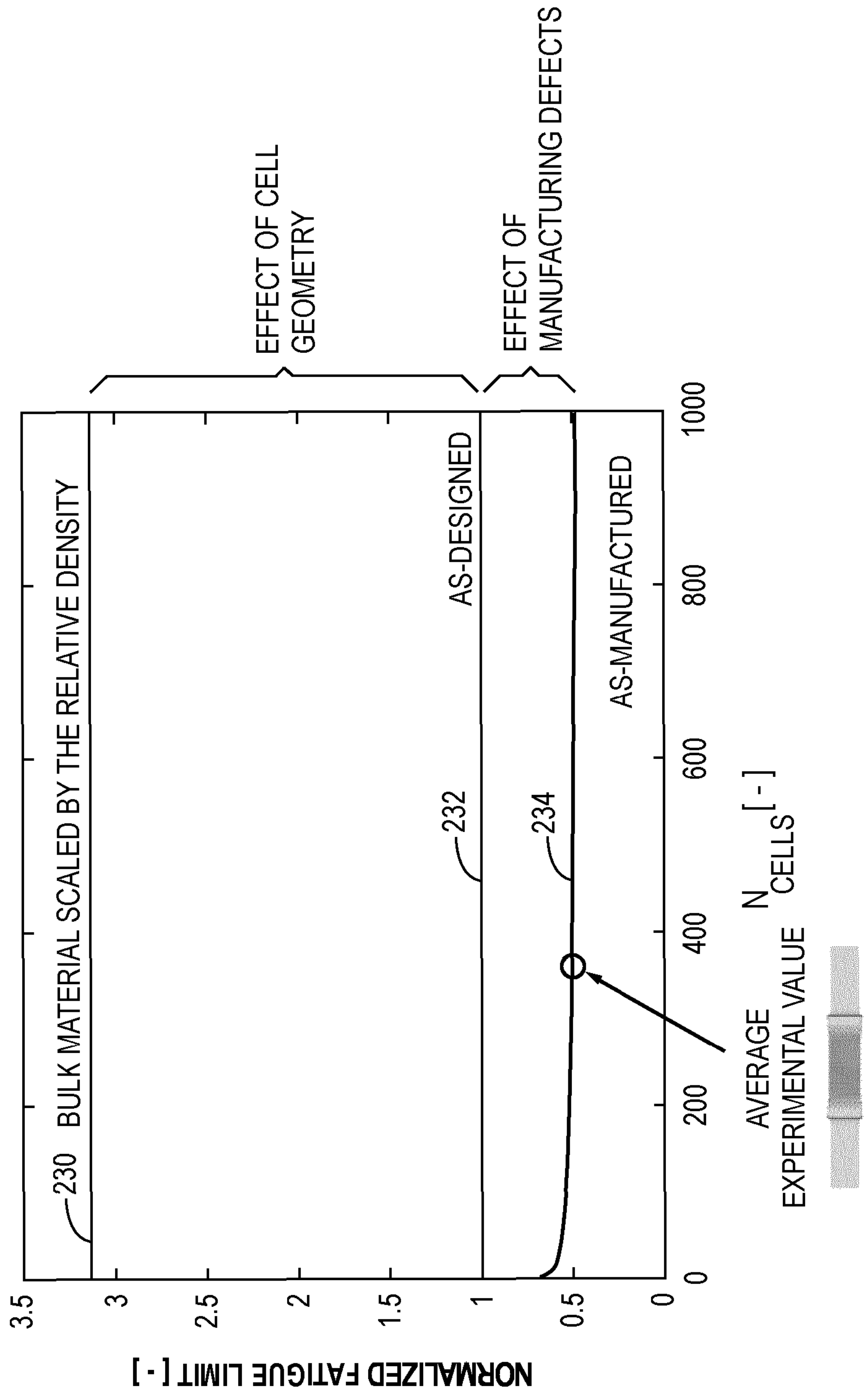
EFFECT OF CELL GEOMETRY
EFFECT OF MANUFACTURING DEFECTS
BULK MATERIAL SCALED BY THE RELATIVE DENSITY
AS-DESIGNED
AS-MANUFACTURED
230
232
234
AVERAGE EXPERIMENTAL VALUE
NORMALIZED FATIGUE LIMIT [ - ]
$N_{CELLS}$ [ - ]
0
0.5
1
1.5
2
2.5
3
3.5
0
200
400
600
800
1000

FIG. 9A

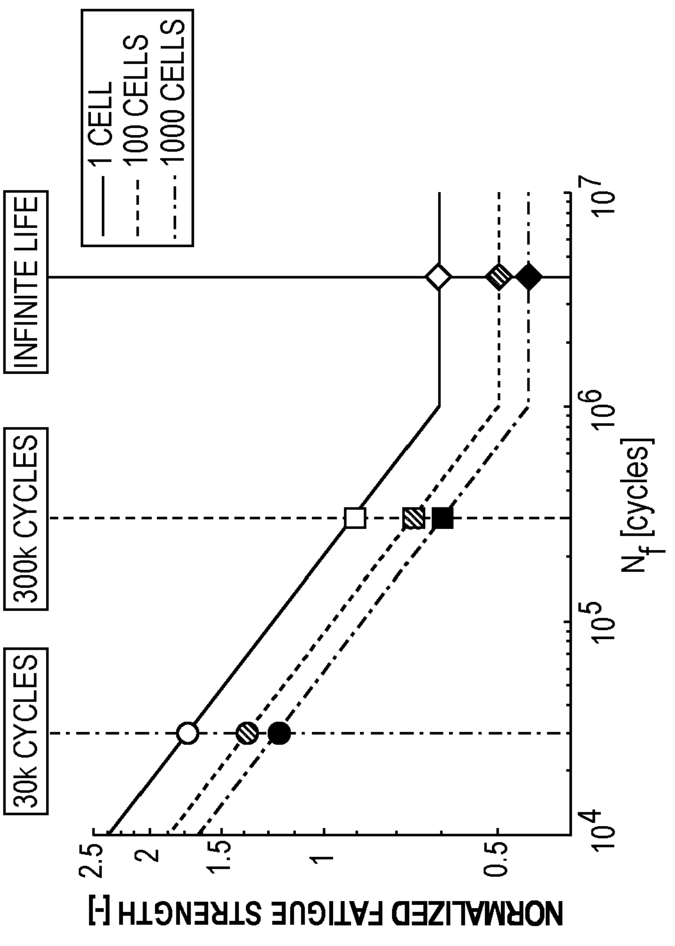
30k CYCLES
300k CYCLES
INFINITE LIFE
1 CELL
100 CELLS
1000 CELLS
NORMALIZED FATIGUE STRENGTH [-]
2.5
2
1.5
1
0.5
$10^4$
$10^5$
$10^6$
$10^7$
$N_f$ [cycles]

FIG. 9B

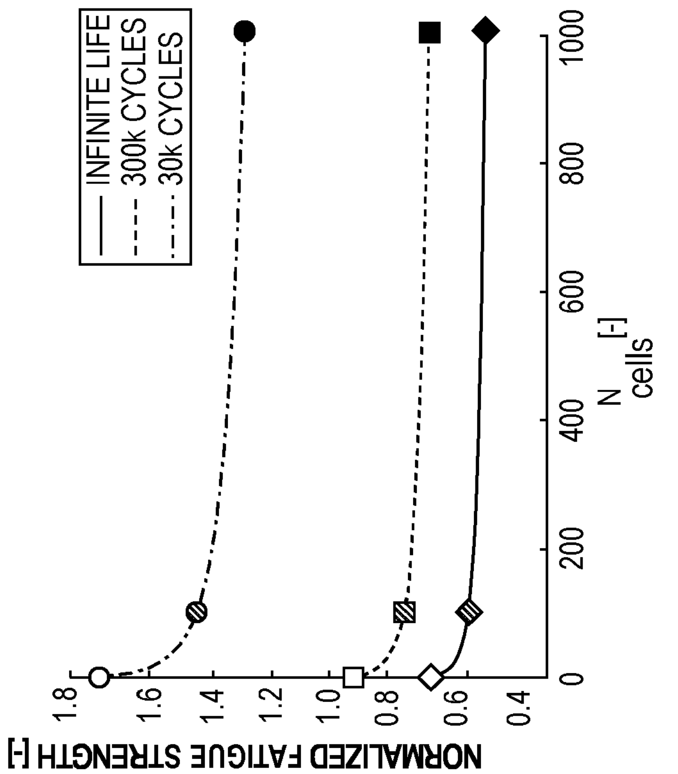
INFINITE LIFE
300k CYCLES
30k CYCLES
NORMALIZED FATIGUE STRENGTH [-]
1.8
1.6
1.4
1.2
1.0
0.8
0.6
0.4
0
200
400
600
800
1000
$N_{cells}$ [-]

Europäisches Patentamt
European Patent Office
Office européen des brevets

# EUROPEAN SEARCH REPORT

Application Number
EP 24 19 7089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAVAZZONI MATTEO ET AL: "Response of an aluminium Schwarz triply periodic minimal surface lattice structure under constant amplitude and random fatigue", INTERNATIONAL JOURNAL OF FATIGUE, ELSEVIER, AMSTERDAM, NL, vol. 163, 31 May 2022 (2022-05-31), XP087121293, ISSN: 0142-1123, DOI: 10.1016/J.IJFATIGUE.2022.107020 [retrieved on 2022-05-31] | 11,12,15 | INV. G06F30/23<br>ADD. G06F119/04 |
| Y | * abstract * | 1-4,7-10 | |
| A | * pages 1,2,7; figures 1(a)-(b), 2(a)-(d), 6, 10, 14(a)-(b), 16(a)-(b) * | 5,6,13, 14 | |
| | ----- | | |
| Y | US 9 639 637 B2 (GUAN XUEFEI [US]; ZHANG JINGDAN [US] ET AL.) 2 May 2017 (2017-05-02)<br>* abstract; claims 1-18; figures 1-14 *<br>* column 5, line 39 - column 6, line 67 *<br>* column 11, line 36 - column 13, line 17 *<br>* column 14, lines 24-51 * | 1-4,7-10 | TECHNICAL FIELDS SEARCHED (IPC)<br>G06F |
| | -----<br>-/-- | | |

The present search report has been drawn up for all claims

1

| Place of search | Date of completion of the search | Examiner |
|---|---|---|
| Munich | 9 January 2025 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 19 7089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU ET AL: "Designing Cellular Structures for Additive Manufacturing Using Voronoi-Monte Carlo Approach", POLYMERS , vol. 11, no. 7 7 July 2019 (2019-07-07), page 1158, XP093142611, CH ISSN: 2073-4360, DOI: 10.3390/polym11071158 Retrieved from the Internet: URL:https://www.ncbi.nlm.nih.gov/pmc/articles/PMC6681063/pdf/polymers-11-01158.pdf * the whole document * ----- | 1-15 | |
| A | CHEN CHU ET AL: "Design for Additive Manufacturing of Cellular Structures", COMPUTER-AIDED DESIGN AND APPLICATIONS, vol. 5, no. 5, 1 January 2008 (2008-01-01) , pages 686-696, XP055213141, ISSN: 1686-4360, DOI: 10.3722/cadaps.2008.686-696 * the whole document * ----- | 1-15 | TECHNICAL FIELDS SEARCHED (IPC) |

The present search report has been drawn up for all claims

1

| Place of search | Date of completion of the search | Examiner |
|---|---|---|
| Munich | 9 January 2025 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 19 7089

This annex lists the patent family members relating to the patent documents cited in the above-mentioned European search report. The members are as contained in the European Patent Office EDP file on
The European Patent Office is in no way liable for these particulars which are merely given for the purpose of information.

09-01-2025

| Patent document cited in search report | Publication date | Patent family member(s) | Publication date |
|---|---|---|---|
| US 9639637 B2 | 02-05-2017 | US 2014100827 A1 | 10-04-2014 |
| | | WO 2014058638 A1 | 17-04-2014 |

EPO FORM P0459

For more details about this annex : see Official Journal of the European Patent Office, No. 12/82